(19) Europäisches Patentamt / European Patent Office / Office européen des brevets

(11) **EP 4 117 213 A1**

(12) **EUROPEAN PATENT APPLICATION**
published in accordance with Art. 153(4) EPC

(43) Date of publication:
**11.01.2023 Bulletin 2023/02**

(21) Application number: **21784270.7**

(22) Date of filing: **23.03.2021**

(51) International Patent Classification (IPC):
**H04L 1/18** (2006.01)

(52) Cooperative Patent Classification (CPC):
**H04L 1/18; H04L 5/00; H04W 72/04**

(86) International application number:
**PCT/CN2021/082490**

(87) International publication number:
**WO 2021/203967 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2020 CN 202010281207**

(71) Applicant: **Huawei Technologies Co., Ltd.**
**Shenzhen, Guangdong 518129, (CN)**

(72) Inventors:
• **LI, Jun**
  **Shenzhen, Guangdong 518129 (CN)**
• **JIAO, Shurong**
  **Shenzhen, Guangdong 518129 (CN)**
• **HUA, Meng**
  **Shenzhen, Guangdong 518129 (CN)**
• **GAO, Fei**
  **Shenzhen, Guangdong 518129 (CN)**

(74) Representative: **Grünecker Patent- und**
**Rechtsanwälte**
**PartG mbB**
**Leopoldstraße 4**
**80802 München (DE)**

(54) **RESOURCE INDICATION METHOD AND RELATED EQUIPMENT**

(57) Embodiments of this application provide a resource indication method and a related device, and relate to the field of communication technologies. According to the method provided in embodiments of this application, a terminal device can send a HARQ-ACK on a PUCCH resource in at least one sub-slot. In this way, flexibility of sending the HARQ-ACK by the terminal device to a network device can be improved. The resource indication method may be applied to the terminal device. The method may include: The terminal device may receive DCI from a network device, where the DCI indicates a slot used by the terminal device to transmit a HARQ-ACK. After receiving the DCI, the terminal device may send the HARQ-ACK on a PUCCH resource in at least one sub-slot of the slot indicated by the DCI. The slot includes at least two sub-slots. In other words, the terminal device may send the HARQ-ACK on a PUCCH resource in one sub-slot of the slot, or may send the HARQ-ACK on a PUCCH resource in a plurality of sub-slots of the slot.

FIG. 9A

## Description

This application claims priority to Chinese Patent Application No. 202010281207.6, filed with the China National Intellectual Property Administration on April 10, 2020 and entitled "RESOURCE INDICATION METHOD AND RELATED DEVICE", which is incorporated herein by reference in its entirety.

## TECHNICAL FIELD

Embodiments of this application relate to the field of communication technologies, and in particular, to a resource indication method and a related device.

## BACKGROUND

A hybrid automatic repeat request (hybrid automatic repeat request, HARQ) is a retransmission method that combines a forward error correction (Forward Error Correction, EFC) technology and an automatic repeat request (Automatic Repeat Request, ARQ) technology, and that is used for error control, to ensure communication quality.

For example, a receive end is user equipment (user equipment, UE), and a transmit end is a base station. The base station may indicate, to the UE in the following manner, a slot (slot) and a physical uplink control channel (Physical Uplink Control Channel, PUCCH) resource that are used for feeding back a HARQ-ACK. The base station may send downlink control information (Downlink Control Information, DCI) to the UE. The DCI includes K1. The UE may determine, based on a value of K1 in the DCI, the slot for feeding back the HARQ-ACK. The DCI further includes indication information of the PUCCH resource, and the indication information includes an identifier ID of the PUCCH resource, a starting location of the PUCCH resource in the slot, and a length of the PUCCH resource. The UE may determine, based on the indication information, the PUCCH resource used for feeding back the HARQ-ACK.

When a plurality of HARQ-ACKs need to be fed back, a plurality of HARQ-ACK information bits constitute one HARQ-ACK codebook (codebook). In the Rel-15 standard, a HARQ-ACK codebook is processed by slot. To be specific, one HARQ-ACK codebook is transmitted in one slot. Each slot includes 14 symbols. The DCI may include a DCI format 1_0 (DCI format 1_0) and a DCI format 1_1 (DCI format 1_1). Both the DCI 1_0 and the DCI 1_1 are applicable to a HARQ-ACK transmission solution in the Rel-15 standard.

The Rel-16 standard proposes a sub-slot (sub-slot) solution. In this solution, one slot may be divided into several parts. For example, one slot may be divided into two sub-slots, and each sub-slot includes seven symbols; or one slot may be divided into seven sub-slots, and each sub-slot includes two symbols. In this sub-slot solution, a HARQ-ACK codebook may be fed back by sub-slot. To be specific, one HARQ-ACK codebook may be transmitted in one sub-slot. However, the DCI 1_0 is not applicable to the sub-slot solution for transmitting a HARQ-ACK.

## SUMMARY

This application provides a resource indication method and a related device, so that a terminal device can send, based on a PUCCH resource indicated in DCI, a HARQ-ACK on the PUCCH resource in at least one sub-slot. This improves flexibility of responding to the DCI by the terminal device.

To achieve the foregoing technical objective, the following technical solutions are used in this application.

According to a first aspect, this application provides a resource indication method. The method may be applied to a terminal device. The method may include: The terminal device may receive DCI from a network device, where the DCI indicates a slot used by the terminal device to transmit a HARQ-ACK. After receiving the DCI, the terminal device may send the HARQ-ACK on a PUCCH resource in at least one sub-slot of the slot. The slot includes at least two sub-slots.

It may be understood that, if the terminal device receives the DCI indicating the slot for transmitting the HARQ-ACK, the terminal device may send the HARQ-ACK to the network device on a PUCCH resource in the slot indicated by the DCI. Specifically, the terminal device may send the HARQ-ACK to the network device on the PUCCH resource in the at least one sub-slot of the slot. In other words, the terminal device may send the HARQ-ACK on a PUCCH resource in one sub-slot of the slot, or may send the HARQ-ACK on a PUCCH resource in a plurality of sub-slots of the slot. In this way, flexibility of sending the HARQ-ACK by the terminal device to the network device can be improved.

One slot may include 14 symbols. One sub-slot may include seven symbols. In this case, one slot may include two sub-slots. Alternatively, one sub-slot may include two symbols. In this case, one slot may include seven sub-slots.

In a possible design of the first aspect, that the terminal device sends the HARQ-ACK on a PUCCH resource in at least one sub-slot of the slot may include: The terminal device sends the HARQ-ACK on a PUCCH resource in a first sub-slot of the slot, where the first sub-slot is one of the at least one sub-slot of the slot. Alternatively, the terminal device sends the HARQ-ACK on a PUCCH resource in the slot. In other words, the terminal device sends the HARQ-ACK on a PUCCH resource in a plurality of sub-slots included in the slot.

In another possible design of the first aspect, the DCI received by the terminal device further indicates a PUCCH resource used by the terminal device to transmit the HARQ-ACK. When the PUCCH resource that is indicated by the DCI and that is used for transmitting the HARQ-ACK occupies a part or all of resources in one sub-slot, the terminal device sends the HARQ-ACK on the PUCCH resource in the first sub-slot of the slot, where the first sub-slot is one of the at least one sub-slot of the slot. Alternatively, when the PUCCH resource that is indicated by the DCI and that is used for transmitting the HARQ-ACK occupies a part or all of resources in each of the at least two sub-slots, the terminal device sends the HARQ-ACK on the PUCCH resource in the slot.

Specifically, if the corresponding PUCCH resource that is indicated by the DCI and that is used for transmitting the HARQ-ACK occupies a part or all of resources in one sub-slot, it indicates that the PUCCH resource occupied by the terminal device to transmit the HARQ-ACK is a resource corresponding to a symbol in the sub-slot. That is, a length of the PUCCH resource does not exceed a boundary of one sub-slot. In this case, the terminal device may send the HARQ-ACK on a PUCCH resource in one sub-slot (for example, the first sub-slot) of the slot.

Specifically, if the corresponding PUCCH resource that is indicated by the DCI and that is used for transmitting the HARQ-ACK occupies a part or all ofresources in each of the at least two sub-slots, it indicates that the PUCCH resource occupied by the terminal device to transmit the HARQ-ACK is a resource corresponding to a symbol in the each of the at least two sub-slots. That is, a length of the PUCCH resource exceeds a boundary of one sub-slot. For example, the length of the PUCCH resource crosses two sub-slots. In this case, the terminal device may send the HARQ-ACK on the PUCCH resource in the slot. The PUCCH resource in the slot includes a resource corresponding to a symbol in a plurality of sub-slots of the slot.

In another possible design of the first aspect, the first sub-slot may be an $N^{th}$ predefined sub-slot in the at least two sub-slots, where N is a positive integer.

The terminal device may obtain the first sub-slot from the network device. Alternatively, the terminal device may determine the predefined first sub-slot according to a protocol.

To be specific, if the PUCCH resource occupies a part or all of resources in one sub-slot, that is, a length of the PUCCH resource does not exceed a boundary of one sub-slot, the terminal device may send the HARQ-ACK on a PUCCH resource in one predefined sub-slot (for example, the first sub-slot) of the slot.

In another possible design of the first aspect, the first sub-slot may alternatively be specified by the network device for the terminal device. Specifically, the terminal device may receive indication information from the network device. The indication information indicates a sub-slot, that is, the first sub-slot, used by the terminal device to transmit the HARQ-ACK. The terminal device may determine the first sub-slot based on the indication information.

In another possible design of the first aspect, the indication information is included in the DCI. In other words, the network device may add the indication information to the DCI and send the DCI to the terminal device. This design provides a specific manner of receiving the indication information by the terminal device from the network device.

In another possible design of the first aspect, the indication information includes an index of a control channel element (Control Channel Element, CCE). In other words, the network device may send the indication information to the terminal device based on the index of the CCE. This design provides a specific manner of receiving the indication information by the terminal device from the network device.

In another possible design of the first aspect, the terminal device may further receive a first PUCCH configuration parameter from the network device. The first PUCCH configuration parameter includes a length of the sub-slot. One slot may include 14 symbols. One sub-slot may include seven symbols. In this case, one slot may include two sub-slots. Alternatively, one sub-slot may include two symbols. In this case, one slot may include seven sub-slots. Based on the length of the sub-slot, the terminal device may determine a quantity of sub-slots in which resources are occupied by the PUCCH resource.

According to a second aspect, this application further provides a resource indication method. The method may be applied to a network device. The method may include: The network device sends DCI to a terminal device, where the DCI indicates a slot used by the terminal device to transmit a HARQ-ACK, and the slot includes at least two sub-slots. The network device receives the HARQ-ACK from the terminal device on a PUCCH resource in at least one sub-slot of the slot.

It may be understood that the DCI sent by the network device indicates the slot used by the terminal device to transmit the HARQ-ACK, and the network device may receive, on the PUCCH resource in the at least one sub-slot of the slot, the HARQ-ACK sent by the terminal device. Specifically, the network device may receive the HARQ-ACK on a PUCCH resource in one sub-slot of the slot, or may receive the HARQ-ACK on a plurality of PUCCH resources in the slot. In this way, the network device may flexibly configure, based on a requirement, the PUCCH resource for transmitting the HARQ-ACK.

In a possible design of the second aspect, when the PUCCH resource occupies a part or all of resources in one sub-slot, the network device receives the HARQ-ACK from the terminal device on a PUCCH resource in a first sub-slot; or when the PUCCH resource in the DCI occupies a part or all of resources in each of the at least two sub-slots, the network device receives the HARQ-ACK from the terminal device on the PUCCH resource in the slot.

In another possible design of the second aspect, the first sub-slot may be an $N^{th}$ predefined sub-slot in the at least two sub-slots, where N is a positive integer.

The network device may indicate the first sub-slot in the slot to the terminal device, or the network device and the terminal device may agree on the first sub-slot in the slot.

In another possible design of the second aspect, the network device may send indication information to the terminal device. The indication information indicates a sub-slot used by the terminal device to transmit the HARQ-ACK.

The first sub-slot may be specified by the network device for the terminal device. For example, the network device sends indication information to the terminal device. The indication information indicates a sub-slot used by the terminal device to transmit the HARQ-ACK.

In another possible design of the second aspect, the indication information is included in the DCI. In other words, the network device may add the indication information to the DCI and send the DCI to the terminal device. This design provides a specific manner of receiving the indication information by the terminal device from the network device.

In another possible design of the second aspect, the indication information includes an index of a control channel element (Control Channel Element, CCE). In other words, the network device may send the indication information to the terminal device based on the index of the CCE. This design provides a specific manner of receiving the indication information by the terminal device from the network device.

In another possible design of the second aspect, the network device sends a first PUCCH configuration parameter to the terminal device. The first PUCCH configuration parameter includes a length of the sub-slot.

According to a third aspect, this application further provides a resource indication method. The method may be applied to a terminal device. The method may include: The terminal device receives a first PUCCH configuration parameter from a network device, where the first PUCCH configuration parameter is used for configuring a PUCCH resource in an initial bandwidth part (Bandwidth Part, BWP). The terminal device may further receive DCI from the network device, where the DCI indicates a slot for transmitting a HARQ-ACK. The terminal device may send the HARQ-ACK on a PUCCH resource in the slot by using an active BWP.

The first PUCCH configuration parameter is used for configuring the PUCCH resource in the initial BWP, and the active BWP is a BWP currently used by the terminal device. In other words, after the terminal device receives the first PUCCH configuration parameter, the terminal device may send the HARQ-ACK on the PUCCH resource in the slot by using the active BWP. In this way, the terminal device can be prevented from switching the BWP. This improves efficiency of sending the HARQ-ACK by the terminal device.

In a possible design of the third aspect, the terminal device may further receive a second PUCCH configuration parameter from the network device. The second PUCCH configuration parameter includes a length of a sub-slot.

According to a fourth aspect, this application further provides a resource indication method. The method may be applied to a network device. The method may include: The network device may send a first PUCCH configuration parameter to a terminal device, where the first PUCCH configuration parameter is used for configuring a PUCCH resource in an initial BWP The network device may further send DCI to the terminal device, where the DCI may indicate a slot for transmitting a HARQ-ACK. The network device may further receive the HARQ-ACK from the terminal device on a PUCCH resource in the slot by using an active BWP.

In a possible design of the fourth aspect, the network device may further send a second PUCCH configuration parameter to the terminal device. The second PUCCH configuration parameter includes a length of a sub-slot.

According to a fifth aspect, this application further provides a terminal device. The terminal device may be configured to implement the method in any one of the first aspect and the possible designs of the first aspect. The terminal device may include a receiving unit and a sending unit. The receiving unit is configured to receive DCI from a network device, where the DCI indicates a slot used by the terminal device to transmit a HARQ-ACK, and the DCI may further indicate a PUCCH resource. The sending unit is configured to send the HARQ-ACK on a PUCCH resource in at least one sub-slot of the slot indicated by the DCI, where the slot includes at least two sub-slots.

In a possible design of the fifth aspect, when the sending unit is configured to send the HARQ-ACK on a PUCCH resource in at least one sub-slot of the slot indicated by the DCI, the sending unit is specifically configured to: when the PUCCH resource in the DCI occupies a part or all of resources in one sub-slot, send the HARQ-ACK on a PUCCH resource in a first sub-slot of the slot; or when the PUCCH resource in the DCI occupies a part or all of resources in each of the at least two sub-slots, send the HARQ-ACK on the PUCCH resource in the slot.

In another possible design of the fifth aspect, the first sub-slot may be an $N^{th}$ predefined sub-slot in a slot, where N is a positive integer.

In another possible design of the fifth aspect, the receiving unit may be further configured to receive indication information from the network device. The indication information indicates a sub-slot used by the terminal device to transmit the HARQ-ACK.

In another possible design of the fifth aspect, the receiving unit may be further configured to receive a first PUCCH configuration parameter from the network device. The first PUCCH configuration parameter includes a length of the sub-slot.

According to a sixth aspect, this application further provides a network device. The network device may be configured to implement the method in any one of the second aspect and the possible designs of the second aspect. The network device may include a receiving unit and a sending unit. The sending unit is configured to send DCI to a terminal device, where the DCI indicates a slot used by the terminal device to transmit a HARQ-ACK, the DCI further indicates a PUCCH resource, and the slot includes at least two sub-slots. The receiving unit is configured to receive the HARQ-ACK from the terminal device in at least one sub-slot of the slot.

In a possible design of the sixth aspect, when the receiving unit is configured to receive the HARQ-ACK from the terminal device in at least one sub-slot of the slot, the receiving unit is specifically configured to: when the PUCCH resource occupies a part or all of resources in one sub-slot, receive the HARQ-ACK from the terminal device on a PUCCH resource in a first sub-slot; or when the PUCCH resource in the DCI occupies a part or all of resources in each of the at least two sub-slots, receive the HARQ-ACK from the terminal device on the PUCCH resource in the slot.

In another possible design of the sixth aspect, the sending unit is further configured to send a first PUCCH configuration parameter to the terminal device. The first PUCCH configuration parameter includes a length of the sub-slot.

According to a seventh aspect, this application further provides a terminal device. The terminal device may be configured to implement the method in any one of the third aspect and the possible designs of the third aspect. The terminal device may include a receiving unit and a sending unit. The receiving unit is configured to receive a first PUCCH configuration parameter from a network device, where the first PUCCH configuration parameter is used for configuring a PUCCH resource in an initial bandwidth part (bandwidth part, BWP). The receiving unit is further configured to receive DCI from the network device, where the DCI indicates a slot for transmitting a HARQ-ACK. The sending unit is configured to send the HARQ-ACK on a PUCCH resource in the slot by using an active BWP.

In a possible design of the seventh aspect, the receiving unit is further configured to receive a second PUCCH configuration parameter from the network device. The second PUCCH configuration parameter includes a length of a sub-slot.

According to an eighth aspect, this application further provides a network device. The network device may be configured to implement the method in any one of the fourth aspect and the possible designs of the fourth aspect. The network device may include a receiving unit and a sending unit. The sending unit is configured to send a first PUCCH configuration parameter to a terminal device, where the first PUCCH configuration parameter is used for configuring a PUCCH resource in an initial BWP. The sending unit is further configured to send DCI to the terminal device, where the DCI may indicate a slot for transmitting a HARQ-ACK. The receiving unit is configured to receive the HARQ-ACK from the terminal device on a PUCCH resource in the slot by using an active BWP.

In a possible design of the eighth aspect, the sending unit is further configured to send a second PUCCH configuration parameter to the terminal device. The second PUCCH configuration parameter includes a length of a sub-slot.

According to a ninth aspect, this application further provides a terminal device. The terminal device may include a processor, a memory, and a communication interface. The memory and the communication interface are coupled to the processor. The memory is configured to store computer program code. The computer program code includes computer instructions. The memory includes a nonvolatile storage medium. When the processor executes the computer instructions, the terminal device is enabled to perform the method in any one of the first aspect and the possible designs of the first aspect and the method in any one of the third aspect and the possible designs of the third aspect.

According to a tenth aspect, this application further provides a network device. The network device may include a processor, a memory, and a communication interface. The memory and the communication interface are coupled to the processor. The memory is configured to store computer program code. The computer program code includes computer instructions. The memory includes a nonvolatile storage medium. When the processor executes the computer instructions, the network device is enabled to perform the method in any one of the second aspect and the possible designs of the second aspect and the method in any one of the fourth aspect and the possible designs of the fourth aspect.

According to an eleventh aspect, this application further provides a computer-readable storage medium. The computer-readable storage medium includes computer instructions. When the computer instructions are run on a device, the device is enabled to perform the method in any one of the first aspect and the possible designs of the first aspect, the method in any one of the second aspect and the possible designs of the second aspect, the method in any one of the third aspect and the possible designs of the third aspect, and the method in any one of the fourth aspect and the possible designs of the fourth aspect.

According to a twelfth aspect, this application further provides a communication apparatus, including a processor and an interface circuit. The processor is configured to: communicate with another apparatus through the interface circuit, and perform the method provided in any one of the foregoing aspects. There are one or more processors.

According to a thirteenth aspect, this application further provides a communication apparatus, including a processor, configured to invoke a program stored in a memory, to perform the method provided in any one of the foregoing aspects. The memory may be located inside or outside the apparatus. In addition, there are one or more processors.

For technical effects brought by any one of the fifth aspect and the possible designs of the fifth aspect, the sixth aspect and the possible designs of the sixth aspect, the seventh aspect and the possible designs of the seventh aspect, and the eighth aspect and the possible designs of the eighth aspect, the terminal device in the ninth aspect, the network device in the tenth aspect, the computer-readable storage medium in the eleventh aspect, and the communication apparatus provided in the twelfth aspect or the thirteenth aspect in embodiments of this application, refer to technical effects brought by different designs in the first aspect or the second aspect. Details are not described herein again.

## BRIEF DESCRIPTION OF DRAWINGS

FIG. 1 is a schematic diagram of a system architecture according to this application;
FIG. 2 is a schematic diagram of a structure of a network device according to an embodiment of this application;
FIG. 3 is a schematic diagram of a structure of a terminal device according to an embodiment of this application;
FIG. 4 is a schematic diagram of division into sub-slots according to an embodiment of this application;
FIG. 5 is a schematic diagram of determining a slot for feeding back a HARQ-ACK according to an embodiment of this application;
FIG. 6 is a flowchart of determining a resource in a slot for feeding back a HARQ-ACK according to an embodiment of this application;
FIG. 7 is a schematic diagram of a PUCCH resource that is in a slot and that is occupied by a HARQ-ACK according to an embodiment of this application;
FIG. 8 is a schematic diagram of PUCCH resource occupation according to an embodiment of this application;
FIG. 9A is a flowchart 1 of a resource indication method according to an embodiment of this application;
FIG. 9B is a flowchart 2 of a resource indication method according to an embodiment of this application;
FIG. 10 is another schematic diagram of PUCCH resource occupation according to an embodiment of this application;
FIG. 11A is another schematic diagram of PUCCH resource occupation according to an embodiment of this application;
FIG. 11B is another schematic diagram of PUCCH resource occupation according to an embodiment of this application;
FIG. 12 is a flowchart of a resource indication method according to an embodiment of this application;
FIG. 13 is a flowchart of another resource indication method according to an embodiment of this application;
FIG. 14 is a schematic diagram 1 of structural composition of a device according to an embodiment of this application; and
FIG. 15 is a schematic diagram 2 of structural composition of a device according to an embodiment of this application.

## DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

Embodiments of this application provide a resource indication method. The method may be applied to a process in which a terminal device feeds back a HARQ-ACK to a network device.

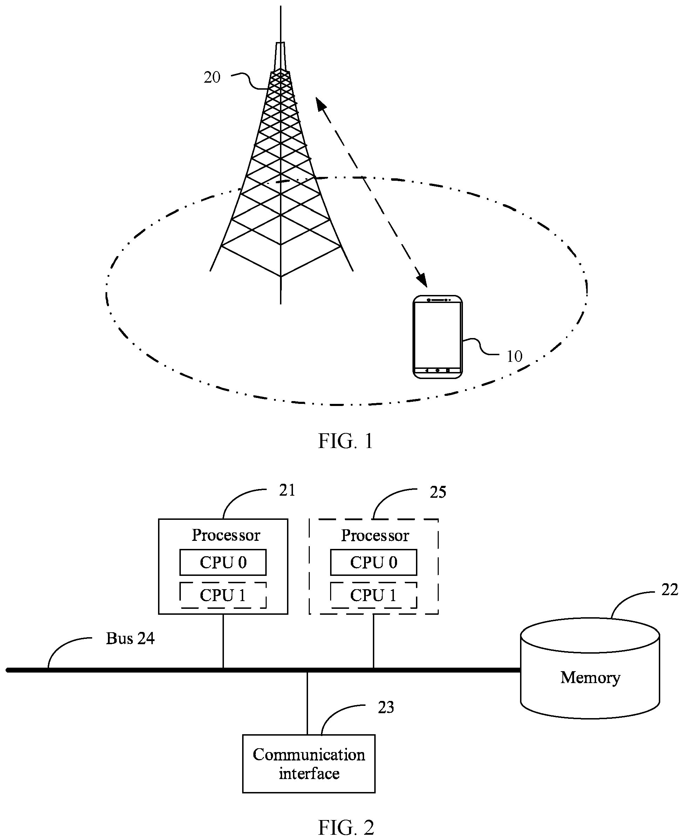

FIG. 1 is a schematic diagram of a system architecture according to an embodiment of this application. The system architecture may include one or more terminal devices and one or more network devices. As shown in FIG. 1, the system architecture includes a terminal device 10 and a network device 20.

The terminal device 10 and the network device 20 may perform data transmission. For example, the network device 20 may send downlink control information DCI to the terminal device 10. The terminal device 10 may receive the DCI from the network device 20, and feed back receiving status information (for example, a HARQ-ACK) of the DCI to the network device.

It may be understood that the resource indication method provided in embodiments of this application may be applied to a new radio (new radio, NR) system. The network device 20 may be specifically a base station, for example, a base station (Base Station, BS) or a base station controller for wireless communication. The base station may also be referred to as a wireless access point, a transceiver station, a relay station, a cell, a transmission reception point (Transmit and Receive Port, TRP), or the like. Specifically, the network device 20 is an apparatus that is deployed in a radio access network and that is configured to provide a wireless communication function for the terminal device. The network device 20 may be connected to the terminal device 10, receive data sent by the terminal device 10, and send the data to a core network device. Main functions of the network device 20 include one or more of the following functions: radio resource management, internet protocol (Internet Protocol, IP) header compression and user data stream encryption, mobility management entity(Mobility Management Entity, MME) selection for attachment of user equipment, routing user plane data to a serving gateway (Service Gateway, SGW), organization and sending of a paging message, organization and sending of a broadcast message, measurement and measurement report configuration for mobility or scheduling, and the like. The network device 20 may include various forms of cellular base stations, home base stations, cells, wireless transmission points, macro base stations, micro base stations, relay stations, wireless access points, and the like.

In systems using different radio access technologies, names of base stations may be different. For example, in an LTE system, a base station is referred to as an evolved NodeB (evolved NodeB, eNB or eNodeB). In a third generation mobile communication technology (the third Generation Telecommunication, 3G) system, a base station is referred to as a NodeB (NodeB). In an NR system, a base station is referred to as a gNB, a CU, a DU, or the like. In a local wireless access system, a base station is referred to as an access point (Access Point). With evolution of communication technologies, a name of the base station may change. In addition, in another possible case, the network device 20 may be another apparatus that provides a wireless communication function for the terminal device. For ease of description, in embodiments of this application, an apparatus that provides a wireless communication function for a terminal device is referred to as a network device.

FIG. 2 is a schematic diagram of a structure of a base station according to an embodiment of this application. As shown in FIG. 2, the base station may include at least one processor 21, a memory 22, a communication interface 23, and a bus 24.

The processor 21 is a control center of the base station, and may be one processor, or may be a collective name of a plurality of processing elements. For example, the processor 21 may be a central processing unit (Central Processing Unit, CPU), or an application-specific integrated circuit (Application-Specific Integrated Circuit, ASIC), or one or more integrated circuits configured to implement this embodiment of this application, for example, one or more microprocessors (Digital Signal Processors, DSPs) or one or more field programmable gate arrays (Field Programmable Gate Arrays, FPGAs).

The processor 21 may perform various functions of the base station by running or executing a software program stored in the memory 22 and by invoking data stored in the memory 22.

In specific implementation, in an embodiment, the processor 21 may include one or more CPUs, for example, a CPU 0 and a CPU 1 in FIG. 2.

In specific implementation, in an embodiment, the base station may include a plurality of processors, for example, the processor 21 and a processor 25 shown in FIG. 2. Each of the processors may be a single-core processor (single-CPU) or may be a multi-core processor (multi-CPU). The processor herein may be one or more devices, circuits, and/or processing cores configured to process data (for example, computer program instructions).

The memory 22 may be, but is not limited to, a read-only memory (Read-Only Memory, ROM) or another type of static storage device that can store static information and instructions, a random access memory (Random Access Memory, RAM) or another type of dynamic storage device that can store information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used for carrying or storing expected program code in an instruction or data structure form and can be accessed by a computer. The memory 22 may exist independently and be connected to the processor 21 through the bus 24. Alternatively, the memory 22 may be integrated with the processor 21.

The memory 22 is configured to store a software program that performs the solution of this application, and the processor 21 controls execution.

The communication interface 23 is configured to communicate with another device or a communication network. For example, the communication interface 23 is configured to communicate with a communication network such as the Ethernet, a radio access network (radio access network, RAN), or a wireless local area network (Wireless Local Area Network, WLAN). The communication interface 23 may include all or a part of a baseband processor, and may optionally include an RF processor. The RF processor is configured to send or receive an RF signal. The baseband processor is configured to process a baseband signal converted from an RF signal, or a baseband signal to be converted into an RF signal.

The bus 24 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 2, but this does not indicate that there is only one bus or only one type of bus.

The device structure shown in FIG. 2 does not constitute a limitation on the base station. The base station may include more or fewer components than those shown in the figure, or some components may be combined, or a different component layout may be used.

The terminal device 10 is a device that has a wireless transceiver function and that can cooperate with a network-side device such as an access network device and/or a core network device to provide a communication service for a user. The terminal device 10 may be a wireless terminal or a wired terminal. The wireless terminal may be a device that provides a user with voice and/or data connectivity, a handheld device with a wireless connection function, or another processing device connected to a wireless modem. The wireless terminal may communicate with one or more core networks or the internet through a radio access network (for example, Radio Access Network, RAN). The wireless terminal may be a mobile terminal, for example, a mobile phone (or referred to as a "cellular" phone), a computer, and a data card. For example, the wireless terminal may be a portable, pocket-sized, handheld, computer built-in, or in-vehicle mobile apparatus that exchanges voice and/or data with the radio access network. For example, the wireless terminal may be a device such as a personal communication service (Personal Communication Service, PCS) phone, a cordless telephone set, a session initiation protocol (SIP) phone, a wireless local loop (WLL, Wireless Local Loop) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a subscriber station (Subscriber Station, SS), customer premises equipment (Customer Premises Equipment, CPE), UE, or the like. For example, the terminal device may be a mobile phone, a tablet computer, a notebook computer, an ultra-mobile personal computer (Ultra-mobile Personal Computer, UMPC), a netbook, or a personal digital assistant (Personal Digital Assistant, PDA). In an embodiment, as shown in FIG. 1, an example in which the terminal device 10 is a mobile phone is shown in the schematic diagram of the system architecture according to this embodiment of this application.

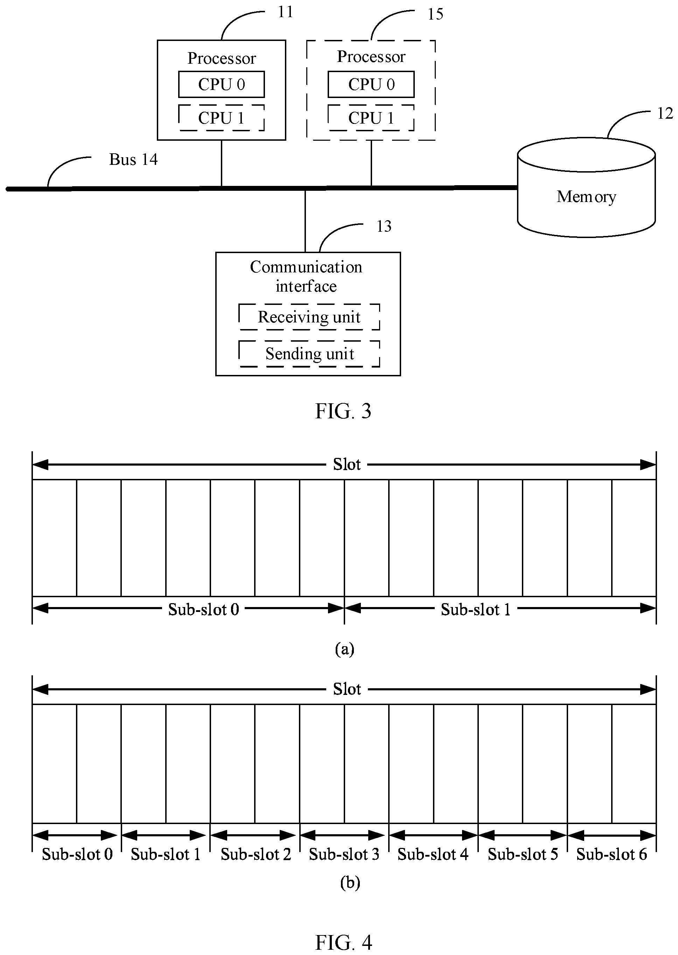

FIG. 3 is a schematic diagram of a structure of a terminal device 10 (for example, UE) according to an embodiment of this application. As shown in FIG. 3, the terminal device 10 may include at least one processor 11, a memory 12, a communication interface 13, and a bus 14.

The processor 11 may be one processor, or may be a collective name of a plurality of processing elements. For example, the processor 11 may be a general-purpose CPU, an ASIC, or one or more integrated circuits configured to control program execution of the solution of this application, for example, one or more DSPs or one or more FPGAs. The processor 11 may perform various functions of the UE by running or executing a software program stored in the memory 12 and by invoking data stored in the memory 12.

In specific implementation, in an embodiment, the processor 11 may include one or more CPUs. For example, as shown in FIG. 3, the processor 11 includes a CPU 0 and a CPU 1.

In specific implementation, in an embodiment, the UE may include a plurality of processors. For example, as shown in FIG. 3, the UE includes the processor 11 and a processor 15. Each of the processors may be a single-CPU or may be a multi-CPU. The processor herein may be one or more devices, circuits, and/or processing cores configured to process data (for example, computer program instructions).

The memory 12 may be, but is not limited to, a ROM or another type of static storage device that can store static information and instructions, a RAM or another type of dynamic storage device that can store information and instructions, an EEPROM, a CD-ROM or another compact disc storage, an optical disc storage (including a compact disc, a laser disc, an optical disc, a digital versatile disc, a Blue-ray disc, or the like), a magnetic disk storage medium or another magnetic storage device, or any other medium that can be used for carrying or storing expected program code in an instruction or data structure form and can be accessed by a computer. The memory 12 may exist independently and be connected to the processor 11 through the bus 14. Alternatively, the memory 12 may be integrated with the processor 11.

The communication interface 13 is configured to communicate with another device or a communication network such as the Ethernet, a RAN, or a WLAN. The communication interface 13 may include a receiving unit for implementing a receiving function and a sending unit for implementing a sending function.

The bus 14 may be an ISA bus, a PCI bus, an EISA bus, or the like. The bus may be classified into an address bus, a data bus, a control bus, and the like. For ease of representation, only one thick line is used to represent the bus in FIG. 3, but this does not indicate that there is only one bus or only one type of bus.

The device structure shown in FIG. 3 does not constitute a limitation on the UE. The UE may include more or fewer components than those shown in the figure, or some components may be combined, or a different component layout may be used. Although not shown, the UE may further include a battery, a camera, a Bluetooth module, a global positioning system (Global Positioning System, GPS) module, a display, and the like. Details are not described herein.

The following describes terms in embodiments of this application.

(1) Downlink control information DCI: The DCI is control information that is carried on a physical downlink control channel PDCCH and that is sent by a network device (for example, a base station) to a terminal device (for example, UE). The DCI may include information such as uplink and downlink resource allocation, HARQ information, and power control. In embodiments of this application, DCI formats include DCI 1_0, DCI 1_1, DCI 1_2, and the like.

A size of each field in the DCI 1_0 is fixed. That is, a size of a field cannot be configured through radio resource control (Radio Resource Control, RRC) signaling. In other words, a total quantity of bits of the DCI 1_0 is fixed, and a quantity of bits of each field is also fixed. For example, a PDSCH-to-HARQ feedback timing indicator (PDSCH-to-HARQ_feedback timing indicator) field in the DCI 1_0 has a fixed size of 3 bits. It should be noted that, because the DCI 1_0 is not affected by RRC configuration, if a size of a field in another DCI format is configured through RRC signaling, the DCI 1_0 may be sent to the terminal device. In this way, after receiving the DCI 1_0, the terminal device may fall back, based on the DCI 1_0, to a status before the DCI is configured through RRC signaling. Therefore, the DCI 1_0 may also be referred to as fallback DCI.

Sizes of some fields in the DCI 1_1 are affected by RRC configuration. That is, sizes of some fields in the DCI 1_1 are variable. For example, a size of the PDSCH-to-HARQ feedback timing indicator field in the DCI 1_1 may be 0 bits, 1 bit, 2 bits, or 3 bits. In other words, a size of the DCI 1_1 changes with RRC configuration.

(2) Slot: In embodiments of this application, one slot (slot) includes 14 orthogonal frequency division multiplexing (Orthogonal frequency division multiplexing, OFDM) symbols, and numbers of the symbols may be 0 to 13. These symbols are consecutive in time domain. In embodiments of this application, one symbol in a slot may be one PUCCH resource.

(3) Sub-slot (sub-slot): One slot may be divided into a plurality of parts, and each part is one sub-slot. As shown in (a) and (b) in FIG. 4, (a) in FIG. 4 shows a sub-slot including seven symbols, and in this case, one slot may be divided into two sub-slots; and (b) in FIG. 4 shows a sub-slot including two symbols, and in this case, one slot may be divided into seven sub-slots. It should be understood that a main difference between the sub-slot and the slot lies in different quantities of symbols included in the sub-slot and the slot. The sub-slot may alternatively be described by using another term. This is not limited in the present invention. Particularly, if a length of the sub-slot is equal to 2, the sub-slot may also be referred to as a slot including two symbols; or if a length of the sub-slot is equal to 7, the sub-slot may also be referred to as a slot including seven symbols. In the present invention, the sub-slot is used as an example for description.

(4) Codebook: If the terminal device receives DCI from the network device, the terminal device sends a HARQ-ACK to the network device. When the terminal device needs to feed back a plurality of HARQ-ACK bits to the network device, these HARQ-ACK bits may constitute one codebook. In other words, the codebook includes a plurality of pieces of HARQ-ACK bit information. In embodiments of this application, services with different latencies may correspond to different codebooks, and different codebooks may have different priorities. For example, a service having a high latency requirement (for example, URLLC) correspond to a high-priority codebook, and a service having a low latency requirement (for example, eMBB) correspond to a low-priority codebook.

(5) PUCCH resource: One PUCCH resource includes a starting physical resource block (PRB: physical resource block), a quantity of PRBs, a starting symbol index (starting symbol index), a quantity of symbols, and the like.

Generally, the base station may send downlink control information DCI to the UE through a physical downlink control channel (Physical Downlink Control Channel, PDCCH). When the base station sends DCI 1_0 to the UE, the DCI 1_0 indicates a slot interval between a physical downlink shared channel (Physical downlink shared channel, PDSCH) and a HARQ-ACK. For example, if a PDSCH-to-HARQ feedback timing indicator field in the DCI 1_0 indicates that the slot interval is K1, the UE may determine, based on the slot interval (that is, K1) that is between the PDSCH and the HARQ-ACK and that is indicated in the DCI 1_0, a slot for transmitting the HARQ-ACK. In this way, the UE may transmit the HARQ-ACK to the base station on a PUCCH resource in the slot.

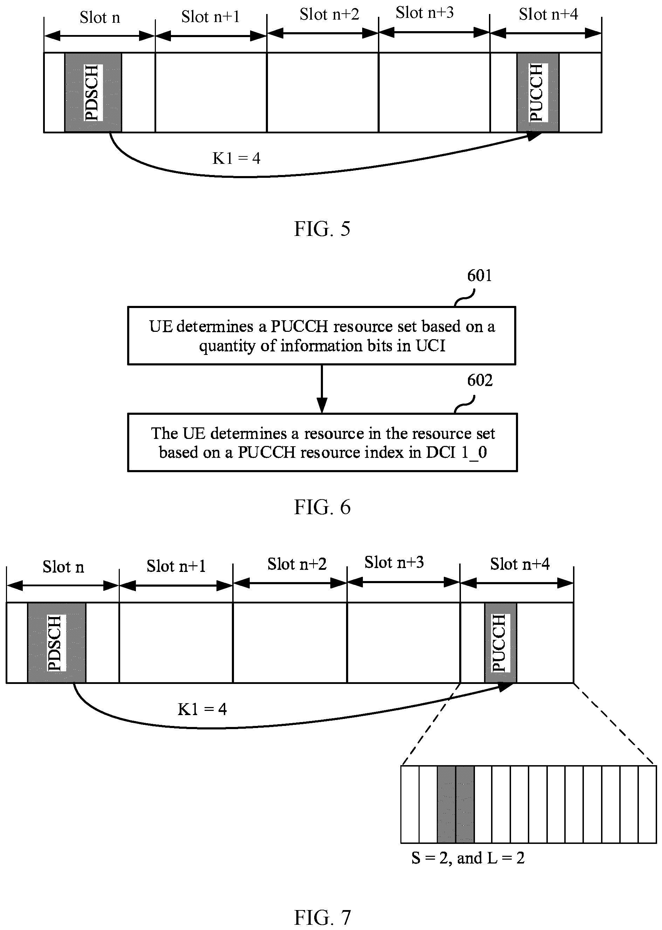

For example, the base station sends the DCI 1_0 to the UE, the UE receives the PDSCH, and the PDSCH ends in a slot (slot) n. FIG. 5 is a schematic diagram of determining, by UE, a slot for transmitting a HARQ-ACK to a base station. It is assumed that K1 in DCI 1_0 is 4. In this case, the UE may determine, based on K1 in the DCI 1_0, that the slot for sending the HARQ-ACK to the base station is a slot n+K1, that is, a slot n+4. Therefore, the UE transmits the HARQ-ACK in the slot n+4.

It may be understood that, after determining the slot for transmitting the HARQ-ACK, the UE further needs to determine a PUCCH resource used for transmitting the HARQ-ACK in the slot, and then transmits the HARQ-ACK on the PUCCH resource in the slot. The DCI 1_0 may include a PUCCH resource index. The UE may determine, based on the PUCCH resource index, the PUCCH resource used for transmitting the HARQ-ACK.

Specifically, the UE may determine, based on a quantity of bits in uplink control information (Uplink control information, UCI), a resource set for transmitting the PUCCH, and then the UE determines, in the resource set, the PUCCH resource based on the PUCCH resource index indicated in the DCI 1_0.

For example, FIG. 6 is a flowchart of a method for determining, by UE, a PUCCH resource for transmitting a HARQ-ACK. The method may include step 601 and step 602.

Step 601: The UE determines a PUCCH resource set based on a quantity of information bits in UCI.

The UCI is uplink control information sent by the UE to a base station. When the UE sends the UCI to the base station, the UE may obtain the quantity of information bits in the UCI. For example, the UE receives DCI from the base station, and when the UE transmits the UCI to the base station in response to the DCI, the UE determines the quantity of information bits in the UCI after generating the UCI.

It should be noted that, when the UE is located in cell coverage of the base station for communication, the UE may use a PUCCH cell configuration parameter (PUCCH-ConfigCommon) of the base station. Because only one PUCCH resource set is configured in the PUCCH cell configuration parameter, the UE uses the PUCCH resource set configured in the PUCCH cell configuration parameter without a need to determine the PUCCH resource set based on the quantity of information bits in the UCI.

It may be understood that, when the UE receives a PUCCH configuration parameter (PUCCH-Config) from the base station, the UE may determine a PUCCH resource set in the PUCCH configuration parameter based on the quantity of information bits in the UCI.

If quantities of information bits in the UCI are different, the UE may select different PUCCH resource sets.

For example, OUCI represents the quantity of information bits in the UCI. When OUCI ≤ 2, the UE selects a first PUCCH resource set. When 2 < OUCI ≤ N2, the UE selects a second PUCCH resource set. When N2 < OUCI ≤ N3, the UE selects a third PUCCH resource set. When N3 < OUCI ≤ 1706, the UE selects a fourth PUCCH resource set.

The PUCCH resource set is configured by the base station for the UE, and specific values of N2 and N3 are specified when the base station configures the PUCCH resource set for the UE. Maximum quantities of bits of the first PUCCH resource set and the fourth PUCCH resource set do not need to be specified, and both N2 and N3 are less than or equal to 1706.

It may be understood that the PUCCH is a physical uplink control channel, and is used for sending the uplink control information UCI, for example, HARQ-ACK information. PUCCH resource configuration of the base station includes cell-specific configuration (PUCCH-ConfigCommon) and UE-specific configuration (PUCCH-Config). The cell-specific PUCCH configuration is a PUCCH configuration parameter that can be used by all UEs in cell coverage of the base station, and the UE-specific PUCCH configuration is a PUCCH parameter specially configured by the base station for the UE.

For example, PUCCH-Config configured by the base station for the UE may include a maximum of four PUCCH resource sets.

For example, the first PUCCH resource set (PUCCH-ResourceSetId = 0) may include a maximum of 32 PUCCH resources, and a condition for invoking the first PUCCH resource set is that the quantity (OUCI) of information bits in the UCI is less than or equal to 2.

The second PUCCH resource set (PUCCH-Re source SetId = 1) may include a maximum of eight PUCCH resources, and a condition for invoking the second PUCCH resource set is 2 < OUCI ≤ N2. N2 is configured by the base station, a configured value needs to be a multiple of 4, and N2 is less than or equal to 1706. If the base station does not configure the value of N2, N2 = 1706. If N2 = 1706, PUCCH-Config configured by the base station for the UE includes only two resource sets.

The third PUCCH resource set (PUCCH-ResourceSetId = 2) may include a maximum of eight PUCCH resources, and a condition for invoking the third PUCCH resource set is N2 < OUCI ≤ N3. N3 is configured by the base station, a configured value needs to be a multiple of 4, and N3 is less than or equal to 1706. If the base station does not configure the value of N3, N3 = 1706. If N3 = 1706, PUCCH-Config configured by the base station for the UE includes only three resource sets.

The fourth PUCCH resource set (PUCCH-ResourceSetId = 3) may include a maximum of eight PUCCH resources, and a condition for invoking the fourth PUCCH resource set is N3 < OUCI ≤ 1706. A maximum quantity, corresponding to the fourth PUCCH resource set, of information bits in the UCI is 1706, and does not need to be configured by the base station.

Step 602: The UE determines a resource in the resource set based on a PUCCH resource index in the DCI 1_0.

In a first case, in PUCCH-Config sent by the base station to the UE, the UE may determine one PUCCH resource in the resource set based on the PUCCH resource index in the DCI 1_0.

It may be understood that each PUCCH resource in PUCCH-Config is configured by the base station for the UE. An identifier (Identifier, ID), a starting location S, a length L, and the like of each resource may be configured in PUCCH-Config. The UE may determine the PUCCH resource in the resource set based on the PUCCH resource index in the DCI 1_0. For example, the PUCCH resource index may be an ID of the PUCCH resource.

For example, FIG. 7 is a schematic diagram of determining a PUCCH resource in a slot. For example, K1 in the DCI 1_0 is 4, and in this case, the UE may determine, based on K1 in the DCI 1_0, that the slot for sending the HARQ-ACK to the base station is the slot n+K1. It is assumed that the UE determines, based on the DCI 1_0, that a starting location of the PUCCH resource is S = 2, and L = 2. In this case, a PUCCH resource that is in the slot and that is occupied for sending the HARQ-ACK by the UE to the base station is as shown in FIG. 7.

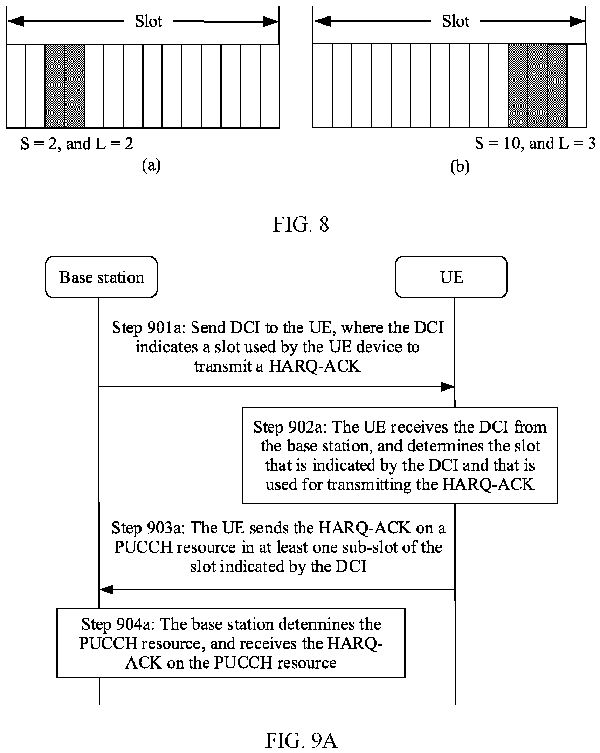

It should be noted that, in the Rel-15 standard protocol, both a starting location S and a length L of a PUCCH resource are calculated based on a slot, and a boundary of the PUCCH resource configured by the base station for the UE does not exceed a boundary of the slot. The boundary of the PUCCH resource may be calculated based on a sum of S and L. Because the slot includes a maximum of 14 symbols, S + L ≤ 14. FIG. 8 is a schematic diagram of PUCCH resource occupation. (a) in FIG. 8 shows a PUCCH resource whose ID = 0, where ID = 0, S = 2, and L = 2. (b) in FIG. 8 shows a PUCCH resource whose ID = 1, where ID = 1, S = 10, and L = 3.

In a second case, the UE determines a PUCCH resource in PUCCH-ConfigCommon of the base station. The UE may determine, based on the PUCCH resource index in the DCI 1_0, the PUCCH resource configured in PUCCH-ConfigCommon.

For example, only one resource set is configured in PUCCH-ConfigCommon, and the resource set includes an index of each PUCCH resource. The PUCCH resource may be determined based on the PUCCH resource index. Table 1 shows an example of PUCCH-ConfigCommon configuration.

**Table 1: PUCCH resource set in PUCCH-ConfigCommon**

| Index | PUCCH format | Starting location | Length | Resource block offset | Initial index set |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{BWP}^{size}/4 \right\rfloor$ | {0, 3, 6, 9} |

In the foregoing table, the resource block offset $\left\lfloor N_{BWP}^{size}/4 \right\rfloor$ indicates rounding down an initial BWP divided by 4.

The resource set configured in PUCCH-ConfigCommon includes 16 PUCCH resources, and each resource corresponds to one index. In addition, a PUCCH resource in the initial BWP (Initial BWP) is configured in PUCCH-ConfigCommon. In other words, the PUCCH resource is in the initial BWP.

It may be understood that, when the UE determines the PUCCH resource that is indicated in the DCI 1_0 and that is in the corresponding slot, the UE may send the HARQ-ACK to the base station on the PUCCH resource in the slot.

When the UE sends, to the base station, one codebook including a plurality of HARQ-ACK bits, the UE may transmit the codebook on one PUCCH resource in the slot. Specifically, the UE transmits the codebook on a PUCCH resource indicated by last received DCI. For example, one codebook is sent in one slot. Two HARQ-ACK bits constitute one codebook. A first HARQ-ACK bit is a HARQ-ACK bit of a PDSCH scheduled by using first DCI, and a PUCCH resource indicated by the first DCI is a PUCCH resource corresponding to S = 2 and L = 2. A second HARQ-ACK bit is a HARQ-ACK bit of a PDSCH scheduled by using second DCI, and a PUCCH resource indicated by the second DCI is a PUCCH resource corresponding to S = 6 and L = 2. In this case, the UE may send a 2-bit HARQ-ACK on the PUCCH resource corresponding to S = 6 and L = 2. To be specific, the UE transmits, by slot, the codebook on one PUCCH resource (the PUCCH resource corresponding to S = 6 and L = 2) in the slot, where the codebook includes 2-bit HARQ-ACK bit information.

It should be noted that, in a process of using the UE, when the UE performs different services, because different services have different latency requirements, slots for feeding back the services by the UE to the base station are also different. For example, when the UE performs an ultra-reliable low-latency communication (ultra-reliable and low-latency communication, URLLC) service, because URLLC has a high latency requirement, the UE may set a high-priority codebook for the service. When the UE performs an enhanced mobile broadband (enhanced Mobile Broadband, eMBB) service, because eMBB has a lower latency requirement, the UE sets a lower-priority codebook for the eMBB service in comparison with the codebook of the URLLC service. In other words, when the UE performs the foregoing two services, one codebook is generated for each service, and priorities of the two codebooks are different. Specifically, to ensure that both the foregoing two services can be performed when the latency requirements are met, the base station may configure one PUCCH-Config parameter for a codebook of each service.

In the Rel-16 standard protocol, one slot may be divided into a plurality of sub-slots (sub-slots). As shown in FIG. 4, one slot may be divided into two sub-slots each including seven symbols, or one slot may be divided into seven sub-slots each including two symbols. It may be understood that PUCCH-Config sent by the base station to the UE includes a length of the sub-slot, so that the UE feeds back the HARQ-ACK based on the length of the sub-slot in PUCCH-Config. For example, the configured length of the sub-slot in PUCCH-Config may be seven symbols, two symbols, or three symbols. In this way, the base station may configure PUCCH-Config for services have different latencies, and lengths of sub-slots of the two services may be different. Therefore, the UE may generate two codebooks based on information configured in PUCCH-Config. The two codebooks may be codebooks both fed back by slot, or may be codebooks both fed back by sub-slot, or may be one codebook fed back by slot and the other codebook fed back by sub-slot.

If the UE receives PUCCH-Config from the base station, the UE may transmit the HARQ-ACK to the base station on a PUCCH resource in the sub-slot based on PUCCH-Config. When the UE needs to send a plurality of HARQ-ACKs to the base station, a plurality of HARQ-ACK information bits may constitute one HARQ-ACK codebook (codebook).

It may be understood that, in the Rel-16 standard protocol, the UE sends the HARQ-ACK codebook to the base station by sub-slot. In other words, one sub-slot corresponds to one codebook. In the Rel-15 standard protocol, the UE sends the HARQ-ACK codebook to the base station by slot. In other words, one slot corresponds to one codebook.

For example, if the UE receives PUCCH-Config from the base station, and the UE configures the length of the sub-slot based on a parameter of the sub-slot in PUCCH-Config, the UE may send the HARQ-ACK to the base station in a manner in which one sub-slot corresponds to one codebook. If the UE receives PUCCH-Config from the base station, and the UE receives the DCI 1_0 from the base station, the UE needs to send the HARQ-ACK to the base station based on the DCI 1_0 in a manner in which one slot corresponds to one codebook. Because it is set in PUCCH-Config that the HARQ-ACK is to be sent to the base station in a manner in which one sub-slot corresponds to one codebook, the UE cannot determine a specific sub-slot that is in a slot and in which the HARQ-ACK should be transmitted. If the UE feeds back the HARQ-ACK to the base station by slot, the UE cannot determine, based on the DCI 1_0, a PUCCH resource that is in a slot and that is used for feeding back the HARQ-ACK.

An embodiment of this application provides a resource indication method. The method may be applied to a process of communication transmission between a terminal device and a network device. In this embodiment of this application, an example in which the terminal device is UE (for example, a mobile phone) and the network device is a base station is used for describing the resource indication method. As shown in FIG. 9A, the method may include step 901a to step 904a.

The base station may be configured to send a PDSCH or a PDCCH to the UE, and may receive an uplink data channel sent by the UE, for example, a physical uplink shared channel (physical uplink shared channel, PUSCH) and a PUCCH. The UE may be configured to send the PUSCH and the PUCCH, and the UE may be further configured to receive the PDSCH and the PDCCH that are sent by the base station.

Step 901a: The base station sends DCI to the UE, where the DCI indicates a slot used by the UE to transmit a HARQ-ACK.

In this embodiment of this application, for example, the DCI is DCI 1_0. In other words, if the DCI 1_0 indicates K1, the slot for transmitting the HARQ-ACK is a slot n+K1. The PDSCH ends in a slot n, and the PDSCH is scheduled by using the DCI 1_0.

Step 902a: The UE receives the DCI from the base station, and determines the slot that is indicated by the DCI and that is used for transmitting the HARQ-ACK.

Step 903a: The UE sends the HARQ-ACK on a PUCCH resource in at least one sub-slot of the slot indicated by the DCI.

It may be understood that the DCI 1_0 sent by the base station may further include a PUCCH resource indicator field, for example, a PUCCH resource indicator. The indicator field may indicate one PUCCH resource index. The UE may determine one PUCCH resource based on the PUCCH resource index, where the PUCCH resource is determined based on a starting location and a length of the PUCCH resource.

If the PUCCH resource does not exceed a boundary of one sub-slot, the UE may transmit the HARQ-ACK to the base station on a PUCCH resource in a first sub-slot. The first sub-slot is one of the at least one sub-slot of the slot. If the PUCCH resource exceeds a boundary of one sub-slot, the UE may transmit the HARQ-ACK to the base station on a PUCCH resource in a plurality of sub-slots. A manner of determining the slot by the UE may be as shown in FIG. 5.

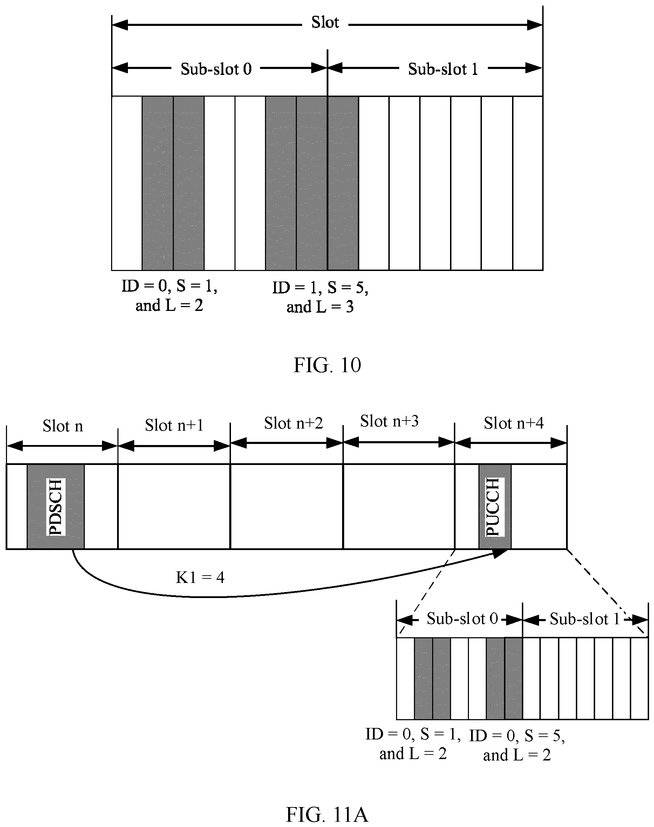

That the PUCCH resource exceeds the boundary of the sub-slot means that duration of the PUCCH crosses the boundary of the sub-slot. In other words, a starting symbol and an ending symbol of the PUCCH resource are in two different sub-slots. For example, the starting symbol of the PUCCH resource is in a first sub-slot (for example, the sub-slot 0 in (a) in FIG. 4), and the ending symbol of the PUCCH resource is in a second sub-slot (for example, the sub-slot 1 in (a) in FIG. 4). For example, if the starting location of the PUCCH resource is 4 and the length of the PUCCH resource is 4, the PUCCH resource occupies symbols 4, 5, 6, and 7, the symbol 4 belongs to the sub-slot 0, and the symbol 7 belongs to the sub-slot 1. In other words, a quantity of symbols occupied by the PUCCH resource exceeds a boundary of the sub-slot 0. If the starting symbol and the ending symbol of the PUCCH are in a same sub-slot (for example, the sub-slot 0 in (a) in FIG. 4), the PUCCH resource does not exceed a boundary of the sub-slot. As shown in FIG. 10, a PUCCH resource index indicates a first PUCCH resource, where the first PUCCH resource corresponds to ID = 0, S = 1, and L = 2. A PUCCH resource index indicates a second PUCCH resource, where the second PUCCH resource corresponds to ID = 1, S = 5, and L = 3. The PUCCH resource corresponding to ID = 0 does not exceed a boundary of a sub-slot, and the PUCCH resource corresponding to ID = 1 exceeds the boundary of the sub-slot.

It may be understood that because the DCI 1_0 indicates the UE to feed back the HARQ-ACK to the base station by slot, the base station may configure a PUCCH resource that exceeds the boundary of the sub-slot for the DCI 1_0 to use. Alternatively, the base station may configure, for the DCI 1_0, a PUCCH resource that does not exceed the boundary of the sub-slot. Specifically, whether the base station configures the PUCCH resource that exceeds the boundary of the sub-slot or configures the PUCCH resource that does not exceed the boundary of the sub-slot is an implementation of the base station, and is not limited in the present invention.

Specifically, the UE may transmit the HARQ-ACK on a PUCCH resource in one sub-slot. Alternatively, the UE may transmit the HARQ-ACK on a PUCCH resource in a plurality of sub-slots.

For example, when the PUCCH resource occupies a part or all of resources in one sub-slot, the UE sends the HARQ-ACK on the PUCCH resource in the first sub-slot of the slot, where the first sub-slot is one of the at least one sub-slot of the slot. Alternatively, when the PUCCH resource occupies a part or all of resources in each of at least two sub-slots, the UE sends the HARQ-ACK on the PUCCH resource in the slot.

Specifically, the PUCCH resource may be a PUCCH resource indicated by the DCI, or may be a PUCCH resource configured by the base station. Sending the HARQ-ACK on the PUCCH resource in the slot may be understood as determining the PUCCH resource by using a starting symbol (for example, a symbol 0) in the slot as a reference. For example, if the PUCCH resource corresponds to S = 2 and L = 3, symbols occupied by the PUCCH resource are symbols 2, 3, and 4. If the PUCCH resource corresponds to S = 6 and L = 4, symbols occupied by the PUCCH resource are symbols 6, 7, 8, and 9. Sending the HARQ-ACK on the PUCCH resource in the sub-slot may be understood as using a starting symbol in the sub-slot as a reference. For example, if the PUCCH resource is in the sub-slot 0, a reference symbol is a symbol 0. If the PUCCH resource is in the sub-slot 1, a reference symbol is a symbol 7. Herein, it is assumed that the length of the sub-slot is 7. For example, if S = 2 and L = 2, symbols occupied by the PUCCH resource are symbols 9 and 10.

Specifically, if the PUCCH resource occupies a part or all of resources in one sub-slot, it indicates that the PUCCH resource occupied by the UE to transmit the HARQ-ACK is a resource corresponding to a symbol in the sub-slot. That is, a length of the PUCCH resource does not exceed a boundary of one sub-slot. In this case, the UE may send the HARQ-ACK on a PUCCH resource in one sub-slot (for example, the first sub-slot) of the slot.

If the PUCCH resource occupies a part or all of resources in each of the at least two sub-slots, it indicates that the PUCCH resource occupied by the UE to transmit the HARQ-ACK is a resource corresponding to a symbol in each of the at least two sub-slots. That is, a length of the PUCCH resource exceeds a boundary of one sub-slot. For example, the length of the PUCCH resource crosses two sub-slots. In this case, the UE may send the HARQ-ACK on the PUCCH resource in the slot. The PUCCH resource in the slot includes a resource corresponding to a symbol in a plurality of sub-slots of the slot.

In a first case, the UE transmits the HARQ-ACK on the PUCCH resource in the first sub-slot of the slot.

In other words, the PUCCH resource indicated by the PUCCH resource index in the DCI 1_0 may be determined in one sub-slot. In this case, the UE may transmit the HARQ-ACK to the base station in the sub-slot.

In an embodiment, because one slot includes at least two sub-slots, the UE and the base station may predefine a first sub-slot. The first sub-slot may be any one of a plurality of sub-slots of the slot. For example, the UE receives a PUCCH-Config parameter sent by the base station, where the PUCCH-Config parameter indicates to divide one slot into two sub-slots each including seven symbols, as shown in (a) in FIG. 4. In this case, the predefined first sub-slot may be the sub-slot 0, or the predefined first sub-slot may be the sub-slot 1. Alternatively, the first sub-slot is an $N^{th}$ predefined sub-slot in the at least two sub-slots, where N is a positive integer, and N may be equal to 1, 2, 3, 4, 5, 6, or 7.

In another embodiment, the UE may receive indication information transmitted by the base station, where the indication information indicates a PUCCH resource that is in a specific sub-slot of the slot and on which the UE transmits the HARQ-ACK.

The indication information may be included in the DCI 1_0. For example, a quantity of redundant bits in the PUCCH resource indicator field in the DCI 1_0 is used as the indication information. For example, when a PUCCH resource set includes only two PUCCH resources, one bit in the PUCCH resource indicator (PUCCH resource indicator, PRI) field indicates a specific PUCCH resource, and the other two bits in the PRI indicate a specific sub-slot. In this way, the first sub-slot is determined. For example, if the other two bits in the PRI are 01, it is determined that the HARQ-ACK is to be sent in the first sub-slot (sub-slot) 1. Alternatively, the first sub-slot may be determined based on an index of a control channel element (Control Channel Element, CCE). Specifically, the CCE may be a first CCE or an $n^{th}$ CCE of the PDCCH.

As shown in FIG. 11A, a PUCCH resource index indicates a first PUCCH resource, where the first PUCCH resource corresponds to ID = 0, S = 1, and L = 2. A PUCCH resource index indicates a second PUCCH resource, where the second PUCCH resource corresponds to ID = 1, S = 5, and L = 2. In other words, the PUCCH resources indicated by the two PUCCH resource indexes do not exceed the boundary of the sub-slot.

In a second case, the UE transmits the HARQ-ACK on a PUCCH resource in a plurality of sub-slots of the slot.

It may be understood that, if the corresponding PUCCH resource that is indicated by the DCI 1_0 and that is used for transmitting the HARQ-ACK occupies a part or all of resources in each of the at least two sub-slots, the UE transmits the HARQ-ACK on the PUCCH resource in the plurality of sub-slots of the slot. Therefore, the base station configures a PUCCH resource by using a slot as a boundary.

For example, the UE may determine, based on the PUCCH resource index in the DCI 1_0, specific sub-slots that are in the slot and that are to be used, and transmit the HARQ-ACK on a PUCCH resource in a plurality of determined sub-slots. For example, a length of the sub-slot is two symbols, and one slot includes seven sub-slots. It is assumed that a starting location of a PUCCH resource corresponding to the PUCCH resource index in the DCI 1_0 is 3, and L is 4. The UE may determine, based on the PUCCH resource index, to transmit the HARQ-ACK in third, fourth, fifth, and sixth symbols of the slot. Sub-slots corresponding to the third, fourth, fifth, and sixth symbols of the slot include a sub-slot 1, a sub-slot 2, and a sub-slot 3.

In other words, when transmitting the HARQ-ACK on the PUCCH resource in the plurality of sub-slots of the slot, the UE may determine, in a slot manner, specific sub-slots that are in the slot and that are to be used.

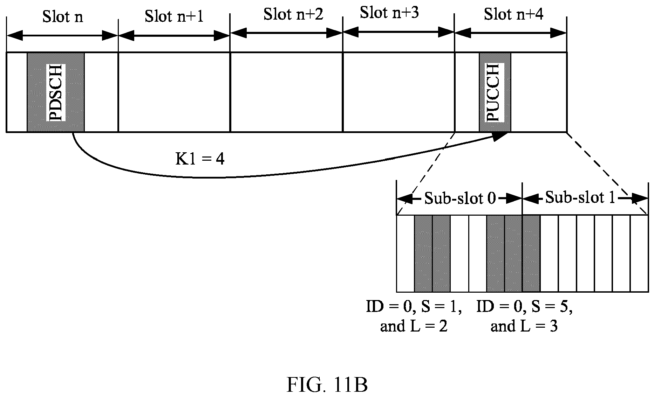

For example, as shown in FIG. 11B, a PUCCH resource index indicates a first PUCCH resource, where the first PUCCH resource corresponds to ID = 0, S = 1, and L = 2. A PUCCH resource index indicates a second PUCCH resource, where the second PUCCH resource corresponds to ID = 1, S = 5, and L = 3. In other words, the PUCCH resource indicated by the PUCCH resource index in the DCI 1_0 exceeds the boundary of the sub-slot.

Step 904a: The base station determines the PUCCH resource, and receives the HARQ-ACK on the PUCCH resource.

It should be noted that, it is assumed that the DCI sent by the base station to the UE is DCI 1_1. Because the DCI 1_1 is used for transmitting the HARQ-ACK to the base station by sub-slot, a length of a PUCCH resource indicated by a PUCCH resource index in the DCI 1_1 is usually less than or equal to a length of the sub-slot. If the length of the PUCCH resource indicated by the PUCCH resource index in the DCI 1_1 is greater than the length of the sub-slot, the UE may remove, from the PUCCH resource, a symbol that exceeds the sub-slot indicated by the length of the sub-slot.

When the UE determines that the PUCCH resource exceeds a boundary of the sub-slot, the UE may redetermine a starting location and a length of the PUCCH resource. For example, the starting location corresponding to the PUCCH resource index is S1, and the length corresponding to the PUCCH resource index is L1. The UE may determine, according to a preset rule, that an updated starting location of the PUCCH resource is S2, and an updated length of the PUCCH resource is L2. The preset rule may be as follows: It is assumed that the length of the sub-slot is N. S2 = f1 (S1, N), where f1 (S1, N) represents S1 mod N, that is, obtaining a remainder by dividing S1 by N. L2 = f2 (L1, N), where f2 (L1, N) represents L1 mod N, that is, obtaining a remainder by dividing L1 by N. It may be understood that, f1 and f2 herein each are a function, and may represent an operation relationship between S1 and N. Herein, that f1 (S1, N) represents S1 mod N is an example.

In a possible implementation, the UE may further determine a first sub-slot based on both the PRI in the DCI 1_0 and a CCE sent by the base station. For example, sub-slots may be grouped, the CCE indicates a specific group, and the PRI indicates a specific sub-slot in the group. Another manner may alternatively be used.

It should be noted that for a service having a high latency requirement, for example, a URLLC service, a codebook of the URLLC service may be sent to the base station by using a PUCCH resource in one sub-slot. For example, the UE receives DCI of a URLLC service, where the DCI includes one PUCCH resource index, and a first PUCCH resource corresponding to a first PUCCH resource index corresponds to S = 1 and L = 2. The UE then receives other DCI, where the DCI indicates a second PUCCH resource index, and a second PUCCH resource corresponding to the second PUCCH resource index corresponds to S = 4 and L = 2. The UE may transmit the codebook by using the second PUCCH resource that corresponds to S = 4 and L = 2 in the first sub-slot.

In some implementations, the base station may first send a PUCCH configuration parameter to the UE, where the PUCCH configuration parameter may indicate the length of the sub-slot. In this way, the UE may transmit the HARQ-ACK by sub-slot based on the length that is of the sub-slot and that is indicated by the PUCCH configuration parameter.

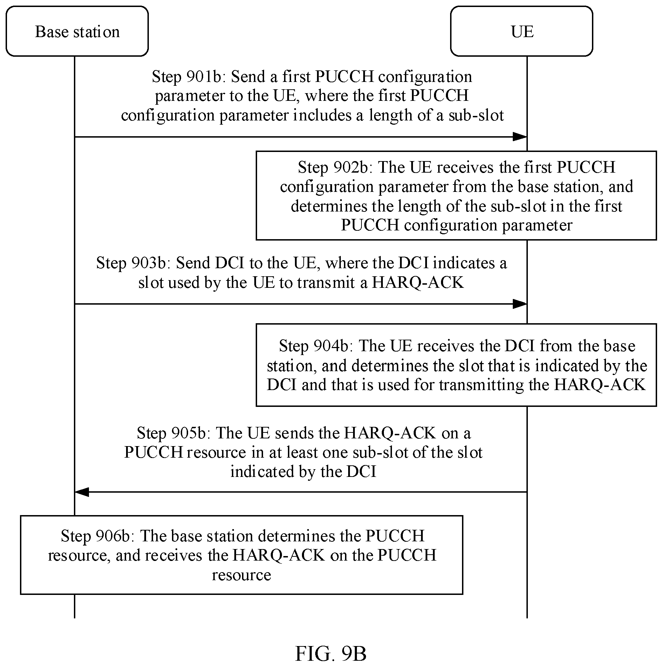

FIG. 9B is a flowchart of a resource indication method according to an embodiment of this application. The method may include step 901b to step 906b.

It should be noted that step 903b to step 906b in FIG. 9B are the same as step 901a to step 904a in the foregoing embodiment, and details are not described herein again.

Step 901b: Abase station sends a first PUCCH configuration parameter to UE, where the first PUCCH configuration parameter includes a length of a sub-slot.

The first PUCCH configuration parameter is PUCCH-Config. PUCCH-Config includes the length that is of the sub-slot and that is configured by the base station.

It may be understood that PUCCH-Config may further include a starting location and a length of a PUCCH resource, so that a HARQ-ACK may be fed back on the PUCCH resource in the PUCCH-Config parameter.

Step 902b: The UE receives the first PUCCH configuration parameter from the base station, and determines the length of the sub-slot in the first PUCCH configuration parameter.

After the UE receives PUCCH-Config, the UE may feed back the HARQ-ACK on the PUCCH resource in the PUCCH-Config parameter based on the length that is of the sub-slot and that is indicated in PUCCH-Config.

It should be noted that PUCCH-Config corresponds to one BWP, and a PUCCH-ConfigCommon parameter corresponds to an initial BWP. When setting the PUCCH-Config parameter, the base station may further set the BWP corresponding to PUCCH-Config. For example, one UE may include four BWPs, and the base station may set a corresponding PUCCH configuration parameter for each BWP. In a process of communication between the base station and the UE, the UE uses only one BWP, and invokes a PUCCH resource configured by the base station for the BWP.

In the method provided in this embodiment of this application, if the UE receives DCI indicating a slot for transmitting the HARQ-ACK, the UE may send the HARQ-ACK to a network device on a PUCCH resource in the slot indicated by the DCI. Specifically, the UE may send the HARQ-ACK to the network device on a PUCCH resource in at least one sub-slot of the slot. In other words, the UE may send the HARQ-ACK on a PUCCH resource in one sub-slot of the slot, or may send the HARQ-ACK on a PUCCH resource in a plurality of sub-slots of the slot. In this way, flexibility of sending the HARQ-ACK by the UE to the network device can be improved.

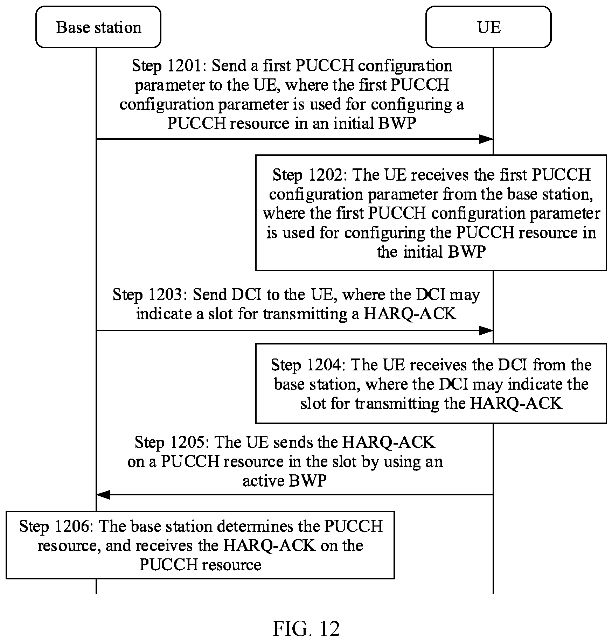

An embodiment of this application further provides a resource indication method. As shown in FIG. 12, the method may include step 1201 to step 1206.

Step 1201: A base station sends a first PUCCH configuration parameter to UE, where the first PUCCH configuration parameter is used for configuring a PUCCH resource in an initial BWP.

The first PUCCH configuration parameter herein is different from the first PUCCH configuration parameter in the foregoing embodiment, and the first PUCCH configuration parameter herein is a cell-specific PUCCH configuration parameter. A PUCCH resource configured in a PUCCH-ConfigCommon parameter is invoked by using the initial BWP, and PUCCH-ConfigCommon indicates to transmit a HARQ-ACK to the base station by slot.

Step 1202: The UE receives the first PUCCH configuration parameter from the base station, where the first PUCCH configuration parameter is used for configuring the PUCCH resource in the initial BWP.

It may be understood that, when the UE receives the first PUCCH configuration parameter from the base station, the UE needs to determine the PUCCH resource in the initial BWP corresponding to PUCCH-ConfigCommon and transmit the HARQ-ACK.

Step 1203: The base station sends DCI to the UE, where the DCI may indicate a slot for transmitting the HARQ-ACK.

In this embodiment of this application, for example, the DCI is DCI 1_0. The UE determines to send the HARQ-ACK to the base station by slot.

Step 1204: The UE receives the DCI from the base station, where the DCI may indicate the slot for transmitting the HARQ-ACK.

The UE may further determine, based on a PUCCH resource index in the DCI 1_0, a resource for transmitting the HARQ-ACK. In this way, the UE may transmit, based on an indication of the DCI 1_0, the HARQ-ACK on the corresponding PUCCH resource in the slot indicated by the DCI 1_0.

Step 1205: The UE sends the HARQ-ACK on the PUCCH resource in the slot by using an active BWP.

It may be understood that the active BWP is a BWP currently used by the UE. In other words, the UE currently transmits the HARQ-ACK to the base station by using the active BWP. If the base station transmits the HARQ-ACK based on the initial BWP indicated by PUCCH-ConfigCommon, the BWP needs to be switched. Because BWP switching affects stability of communication between the UE and the base station, the UE may transmit the HARQ-ACK to the base station in the active BWP.

Because the base station may configure a PUCCH resource for each BWP, the UE may transmit the HARQ-ACK by using the active BWP.

Step 1206: The base station determines the PUCCH resource, and receives the HARQ-ACK on the PUCCH resource.

Step 1206 is the same as step 906b in the foregoing embodiment, and details are not described herein again.

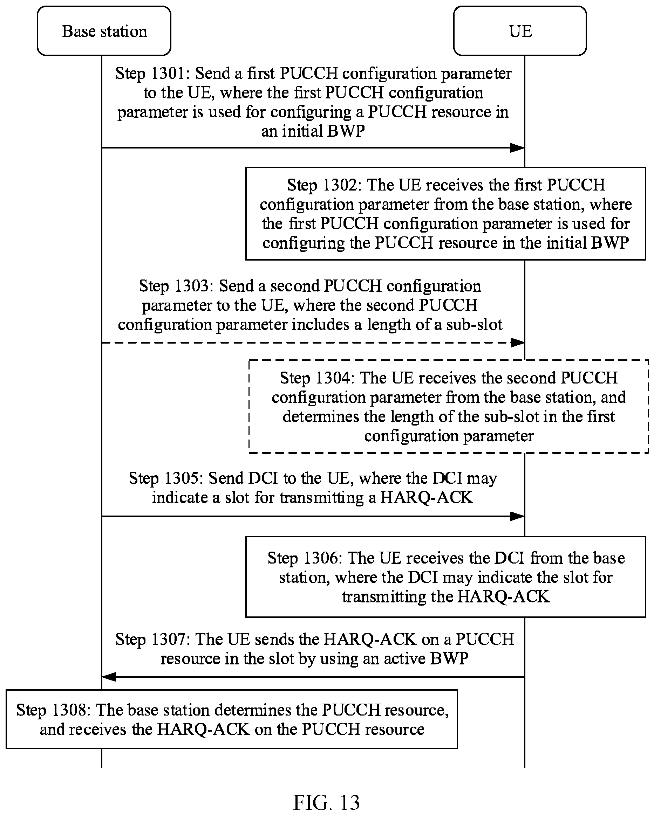

An embodiment of this application further provides a resource indication method. As shown in FIG. 13, the method may include step 1301 to step 1308.

Step 1301: A base station sends a first PUCCH configuration parameter to UE, where the first PUCCH configuration parameter is used for configuring a PUCCH resource in an initial BWP.

The first PUCCH configuration parameter is a PUCCH-ConfigCommon parameter. A PUCCH resource configured in the PUCCH-ConfigCommon parameter is invoked by using the initial BWP.

Step 1302: The UE receives the first PUCCH configuration parameter from the base station, where the first PUCCH configuration parameter is used for configuring the PUCCH resource in the initial BWP.

Step 1301 and step 1302 are the same as step 1201 and step 1202, and details are not described herein again.

Step 1303: The base station sends a second PUCCH configuration parameter to the UE, where the second PUCCH configuration parameter includes a length of a sub-slot.

The second PUCCH configuration parameter is a UE-specific PUCCH configuration parameter.

Step 1304: The UE receives the second PUCCH configuration parameter from the base station, and determines the length of the sub-slot in the second PUCCH configuration parameter.

Step 1305: The base station sends DCI to the UE, where the DCI indicates a slot used by the UE to transmit a HARQ-ACK.

Step 1306: The UE receives the DCI from the base station, and determines the slot that is indicated by the DCI and that is used for transmitting the HARQ-ACK.

Step 1303 to step 1306 are the same as step 901 to step 904 in the foregoing embodiment, and details are not described herein again.

Step 1307: The UE sends, by using an active BWP, the HARQ-ACK on a PUCCH resource in at least one sub-slot of the slot indicated by the DCI.

Step 1308: The base station determines the PUCCH resource, and receives the HARQ-ACK on the PUCCH resource.

Step 1307 and step 1308 are the same as step 1205 and step 1206, and details are not described herein again.

It should be noted that the base station pre-configures a cell-specific PUCCH configuration parameter for the UE, and then the base station configures the UE-specific PUCCH configuration parameter for the UE. When the UE receives DCI 1_0 from the base station, because the DCI 1_0 is used for feeding back the HARQ-ACK to the base station by slot, the DCI 1_0 may be used for sending, by using the active BWP, the HARQ-ACK on a PUCCH resource in a slot indicated by the DCI 1_0.

It may be understood that, to implement the foregoing functions, the foregoing network device and terminal device include corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

An embodiment of this application provides a terminal device. The terminal device is divided into function modules based on the foregoing method example. For example, each function module corresponding to each function may be obtained through division, or two or more functions may be integrated into one processing module. The integrated module may be implemented in a form of hardware, or may be implemented in a form of a software function module. It should be noted that, in embodiments of this application, division into modules is an example, and is merely logical function division. In actual implementation, another division manner may be used.

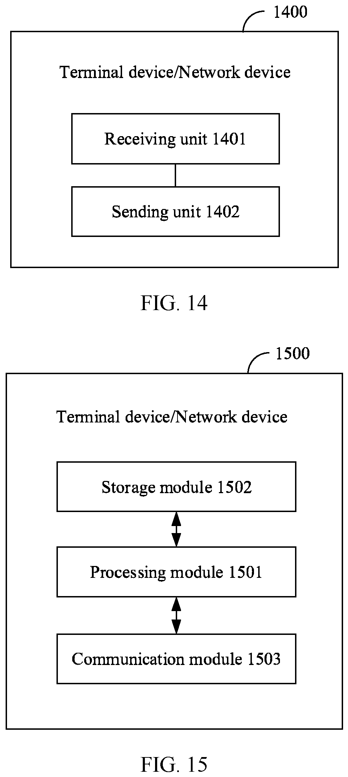

When each function module corresponding to each function is obtained through division, as shown in FIG. 14, a terminal device or network device 1400 in this embodiment of this application includes a receiving unit 1401 and a sending unit 1402.

When the device 1400 is a terminal device, the receiving unit 1401 is configured to perform steps performed by the terminal device or the UE in the foregoing method embodiments, for example, step 902a, step 902b, step 904b, step 1202, and step 1204, and/or another process used for the technology described in this specification. The sending unit 1402 is configured to perform steps performed by the terminal device or the UE in the foregoing method embodiments, for example, step 903a, step 905b, and step 1205, and/or another process used for the technology described in this specification.

When the device 1400 is a network device, the receiving unit 1401 is configured to perform steps performed by the network device in the foregoing method embodiments, for example, step 904a, step 906b, and step 1206, and/or another process used for the technology described in this specification. The sending unit 1402 is configured to perform steps performed by the network device in the foregoing method embodiments, for example, step 901a, step 901b, step 903b, step 1201, and step 1203, and/or another process used for the technology described in this specification.

Certainly, the terminal device or network device 1400 includes but is not limited to the units and modules listed above. In addition, functions that can be specifically implemented by the function units include but are not limited to functions corresponding to the method steps in the foregoing embodiments. For detailed descriptions of other units of the terminal device 1400, refer to detailed descriptions of the method steps corresponding to the units. Details are not described herein again in this embodiment of this application.

When each function module corresponding to each function is obtained through division, as shown in FIG. 15, a terminal device or network device 1500 in this embodiment of this application includes a processing module 1501, a storage module 1502, and a communication module 1503.

The processing module 1501 is configured to control and manage the device 1500. The storage module 1502 is configured to store program code and data of the device 1500. The communication module 1503 is configured to communicate with another device. For example, the communication module is configured to receive data sent by the another device or send data to the another device.

The processing module 1501 may be a processor or a controller, for example, a CPU, a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1501 may implement or execute various example logical blocks, modules, and circuits described with reference to content disclosed in this application. The processor may be a combination of processors implementing a computing function, for example, a combination of one or more microprocessors, or a combination of the DSP and a microprocessor. The communication module 1503 may be a transceiver, a transceiver circuit, a communication interface, or the like. The storage module 1502 may be a memory.

When the processing module 1501 is a processor (the processor 11 and the processor 15 shown in FIG. 3), the communication module 1503 is an RF circuit (the communication interface 13 shown in FIG. 3), and the storage module 1502 is a memory (the memory 12 shown in FIG. 3), the device provided in this application may be the UE shown in FIG. 3. The processor, the communication interface, and the memory may be coupled together through a bus.

An embodiment of this application further provides a computer program product. When the computer program product runs on a computer, the computer is enabled to perform any method provided in the foregoing method embodiments, for example, implement related method steps in any one of FIG. 9A, FIG. 12, and FIG. 13.

The device 1400, the device 1500, the computer storage medium, or the computer program product provided in this application is configured to perform the corresponding methods provided above. Therefore, for beneficial effects that can be achieved by the device 1400, the device 1500, the computer storage medium, or the computer program product, refer to beneficial effects of the corresponding methods provided above, and details are not described herein again.

In another implementation, an embodiment of this application provides a communication apparatus. The communication apparatus may include at least one processing element and an interface circuit. The at least one processing element is configured to perform any resource indication method provided in the foregoing method embodiments. The processing element may perform a part or all of steps performed by the terminal device or the network device in a first manner, to be specific, by invoking a program stored in a storage element; or may perform a part or all of steps performed by the terminal device or the network device in a second manner, to be specific, by using a hardware integrated logic circuit in the processing element in combination with instructions; or may certainly perform, by combining the first manner and the second manner, a part or all of steps performed by the terminal device or the network device. It may be understood that the interface circuit may be a transceiver or an input/output interface. Optionally, the communication apparatus may further include a memory, configured to store instructions executed by the foregoing processing element, or store input data required by the processing element to run instructions, or store data generated after the processing element runs instructions. The communication apparatus may be a chip or a chip system.

The foregoing descriptions about implementations allow a person skilled in the art to clearly understand that, for the purpose of convenient and brief description, division into the foregoing function modules is merely used as an example for illustration. In actual application, the foregoing functions can be allocated to different modules for implementation based on a requirement, that is, an inner structure of the apparatus is divided into different function modules to implement all or a part of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A resource indication method, comprising:

   receiving downlink control information DCI, wherein the DCI indicates a slot used by a terminal device to transmit a hybrid automatic repeat request-acknowledgment HARQ-ACK; and
   sending the HARQ-ACK on a physical uplink control channel PUCCH resource in at least one sub-slot of the slot, wherein the slot comprises at least two sub-slots.

2. The method according to claim 1, wherein the sending the HARQ-ACK on a PUCCH resource in at least one sub-slot of the slot comprises:

   sending the HARQ-ACK on a PUCCH resource in a first sub-slot, wherein the first sub-slot is one of the at least one sub-slot of the slot; or
   sending the HARQ-ACK on a PUCCH resource in the slot.

3. The method according to claim 2, wherein the first sub-slot is an $N^{th}$ predefined sub-slot in the at least two sub-slots, wherein N is a positive integer.

4. The method according to claim 2, wherein the method further comprises:
   determining the first sub-slot based on indication information from a network device, wherein the indication information indicates a sub-slot used by the terminal device to transmit the HARQ-ACK.

5. The method according to claim 4, wherein the indication information is comprised in the DCI.

6. The method according to claim 4 or 5, wherein the indication information comprises an index of a control channel element CCE.

7. The method according to any one of claims 1 to 6, wherein the method further comprises:
   receiving a first PUCCH configuration parameter from the network device, wherein the first PUCCH configuration parameter comprises a length of the sub-slot.

8. A resource indication method, comprising:

   sending downlink control information DCI, wherein the DCI indicates a slot used by a terminal device to transmit a hybrid automatic repeat request-acknowledgment HARQ-ACK, and the slot comprises at least two sub-slots; and

receiving the HARQ-ACK from the terminal device on a physical uplink control channel PUCCH resource in at least one sub-slot of the slot.

9.  The method according to claim 8, wherein the method further comprises:

   receiving the HARQ-ACK from the terminal device on a PUCCH resource in a first sub-slot, wherein the first sub-slot is one of the at least one sub-slot of the slot; or
   receiving the HARQ-ACK from the terminal device on a PUCCH resource in the slot.

10. The method according to claim 9, wherein the first sub-slot is an $N^{th}$ predefined sub-slot in the at least two sub-slots, wherein N is a positive integer.

11. The method according to claim 9, wherein the method further comprises:
    sending indication information to the terminal device, wherein the indication information indicates a sub-slot used by the terminal device to transmit the HARQ-ACK.

12. The method according to claim 11, wherein the indication information is comprised in the DCI.

13. The method according to claim 11 or 12, wherein the indication information comprises an index of a control channel element CCE.

14. The method according to any one of claims 8 to 13, wherein the method further comprises:
    sending a first PUCCH configuration parameter to the terminal device, wherein the first PUCCH configuration parameter comprises a length of the sub-slot.

15. A resource indication method, comprising:

    receiving a first physical uplink control channel PUCCH configuration parameter from a network device, wherein the first PUCCH configuration parameter is used for configuring a PUCCH resource in an initial bandwidth part BWP;
    receiving downlink control information DCI from the network device, wherein the DCI indicates a slot for transmitting a hybrid automatic repeat request-acknowledgment HARQ-ACK; and
    sending the HARQ-ACK on a PUCCH resource in the slot by using an active BWP.

16. The method according to claim 15, wherein the method further comprises:
    receiving a second PUCCH configuration parameter from the network device, wherein the second PUCCH configuration parameter comprises a length of a sub-slot.

17. A resource indication method, comprising:

    sending a first physical uplink control channel PUCCH configuration parameter to a terminal device, wherein the first PUCCH configuration parameter is used for configuring a PUCCH resource in an initial bandwidth part BWP;
    sending downlink control information DCI to the terminal device, wherein the DCI indicates a slot for transmitting a hybrid automatic repeat request-acknowledgment HARQ-ACK; and
    receiving the HARQ-ACK from the terminal device on a PUCCH resource in the slot by using an active BWP.

18. The method according to claim 17, wherein the method further comprises:
    sending a second PUCCH configuration parameter to the terminal device, wherein the second PUCCH configuration parameter comprises a length of a sub-slot.

19. A communication apparatus, comprising a receiving unit and a sending unit, wherein

    the receiving unit is configured to receive downlink control information DCI, wherein the DCI indicates a slot used by a terminal device to transmit a hybrid automatic repeat request-acknowledgment HARQ-ACK; and
    the sending unit is configured to send the HARQ-ACK on a physical uplink control channel PUCCH resource in at least one sub-slot of the slot, wherein the slot comprises at least two sub-slots.

20. The communication apparatus according to claim 19, wherein when the sending unit is configured to send the HARQ-ACK on a physical uplink control channel PUCCH resource in at least one sub-slot of the slot, the sending unit is specifically configured to:

> send the HARQ-ACK on a PUCCH resource in a first sub-slot, wherein the first sub-slot is one of the at least one sub-slot of the slot; or
> send the HARQ-ACK on a PUCCH resource in the slot.

21. The communication apparatus according to claim 20, wherein the first sub-slot is an $N^{th}$ predefined sub-slot in the at least two sub-slots, wherein N is a positive integer.

22. The communication apparatus according to claim 20, wherein the communication apparatus further comprises a determining unit, wherein
the determining unit is configured to determine the first sub-slot based on indication information from a network device, wherein the indication information indicates a sub-slot used by the terminal device to transmit the HARQ-ACK.

23. The communication apparatus according to claim 22, wherein the indication information is comprised in the DCI.

24. The communication apparatus according to claim 22 or 23, wherein the indication information comprises an index of a control channel element CCE.

25. The communication apparatus according to any one of claims 19 to 24, wherein the receiving unit is further configured to receive a first PUCCH configuration parameter from the network device, wherein the first PUCCH configuration parameter comprises a length of the sub-slot.

26. A communication apparatus, comprising a sending unit and a receiving unit, wherein

> the sending unit is configured to send downlink control information DCI, wherein the DCI indicates a slot used by a terminal device to transmit a hybrid automatic repeat request-acknowledgment HARQ-ACK, and the slot comprises at least two sub-slots; and
> the receiving unit is configured to receive the HARQ-ACK from the terminal device on a physical uplink control channel PUCCH resource in at least one sub-slot of the slot.

27. The communication apparatus according to claim 26, wherein the receiving unit is further configured to:

> receive the HARQ-ACK from the terminal device on a PUCCH resource in a first sub-slot, wherein the first sub-slot is one of the at least one sub-slot of the slot; or
> receive the HARQ-ACK from the terminal device on a PUCCH resource in the slot.

28. The communication apparatus according to claim 27, wherein the first sub-slot is an $N^{th}$ predefined sub-slot in the at least two sub-slots, wherein N is a positive integer.

29. The communication apparatus according to claim 27, wherein the sending unit is further configured to:
send indication information to the terminal device, wherein the indication information indicates a sub-slot used by the terminal device to transmit the HARQ-ACK.

30. The communication apparatus according to claim 29, wherein the indication information is comprised in the DCI.

31. The communication apparatus according to claim 29 or 30, wherein the indication information comprises an index of a control channel element CCE.

32. The communication apparatus according to any one of claims 26 to 31, wherein the sending unit is further configured to send a first PUCCH configuration parameter to the terminal device, wherein the first PUCCH configuration parameter comprises a length of the sub-slot.

33. A communication device, comprising a receiving unit and a sending unit, wherein

the receiving unit is configured to: receive a first physical uplink control channel PUCCH configuration parameter from a network device, wherein the first PUCCH configuration parameter is used for configuring a PUCCH resource in an initial bandwidth part BWP; and receive downlink control information DCI from the network device, wherein the DCI indicates a slot for transmitting a hybrid automatic repeat request-acknowledgment HARQ-ACK; and

the sending unit is configured to send the HARQ-ACK on a PUCCH resource in the slot by using an active BWP.

34. The communication device according to claim 33, wherein the receiving unit is further configured to receive a second PUCCH configuration parameter from the network device, wherein the second PUCCH configuration parameter comprises a length of a sub-slot.

35. A communication apparatus, comprising a sending unit and a receiving unit, wherein

the sending unit is configured to: send a first physical uplink control channel PUCCH configuration parameter to a terminal device, wherein the first PUCCH configuration parameter is used for configuring a PUCCH resource in an initial bandwidth part BWP; and send downlink control information DCI to the terminal device, wherein the DCI indicates a slot for transmitting a hybrid automatic repeat request-acknowledgment HARQ-ACK; and

the receiving unit is configured to receive the HARQ-ACK from the terminal device on a PUCCH resource in the slot by using an active BWP.

36. The communication apparatus according to claim 35, wherein the sending unit is further configured to send a second PUCCH configuration parameter to the terminal device, wherein the second PUCCH configuration parameter comprises a length of a sub-slot.

37. A communication apparatus, comprised in a terminal device, and comprising a processor, a memory, and a communication interface, wherein the memory and the communication interface are coupled to the processor, the memory is configured to store computer program code, the computer program code comprises computer instructions, the memory comprises a nonvolatile storage medium, and when the processor executes the computer instructions, the communication apparatus is enabled to perform the method according to any one of claims 1 to 7 or either of claims 15 and 16.

38. A communication apparatus, comprised in a network device, and comprising a processor, a memory, and a communication interface, wherein the memory and the communication interface are coupled to the processor, the memory is configured to store computer program code, the computer program code comprises computer instructions, the memory comprises a nonvolatile storage medium, and when the processor executes the computer instructions, the communication apparatus is enabled to perform the method according to any one of claims 8 to 14 or either of claims 17 and 18.

39. A computer-readable storage medium, wherein the computer-readable storage medium comprises computer instructions, and when the computer instructions are run on a device, the device is enabled to perform the method according to any one of claims 1 to 18.

40. A chip system, wherein the chip system is applied to a communication apparatus comprising a touchscreen, the chip system comprises one or more interface circuits and one or more processors, and the interface circuit and the processor are connected through a line; the interface circuit is configured to receive a signal from a memory of the communication apparatus, and send the signal to the processor, wherein the signal comprises computer instructions stored in the memory; and when the processor executes the computer instructions, the communication apparatus performs the method according to any one of claims 1 to 18.

41. A computer program product, wherein when the computer program product runs on a computer, the computer is enabled to perform the method according to any one of claims 1 to 18.

FIG. 1

FIG. 2

FIG. 3

(a)

(b)

FIG. 4

Slot n | Slot n+1 | Slot n+2 | Slot n+3 | Slot n+4

PDSCH

PUCCH

K1 = 4

FIG. 5

601

UE determines a PUCCH resource set based on a
quantity of information bits in UCI

602

The UE determines a resource in the resource set
based on a PUCCH resource index in DCI 1_0

FIG. 6

Slot n | Slot n+1 | Slot n+2 | Slot n+3 | Slot n+4

PDSCH

PUCCH

K1 = 4

S = 2, and L = 2

FIG. 7

Slot

Slot

S = 2, and L = 2

S = 10, and L = 3

(a)

(b)

FIG. 8

Base station

UE

Step 901a: Send DCI to the UE, where the DCI indicates a slot used by the UE device to transmit a HARQ-ACK

Step 902a: The UE receives the DCI from the base station, and determines the slot that is indicated by the DCI and that is used for transmitting the HARQ-ACK

Step 903a: The UE sends the HARQ-ACK on a PUCCH resource in at least one sub-slot of the slot indicated by the DCI

Step 904a: The base station determines the PUCCH resource, and receives the HARQ-ACK on the PUCCH resource

FIG. 9A

| Base station | | UE |
|---|---|---|

Step 901b: Send a first PUCCH configuration parameter to the UE, where the first PUCCH configuration parameter includes a length of a sub-slot

Step 902b: The UE receives the first PUCCH configuration parameter from the base station, and determines the length of the sub-slot in the first PUCCH configuration parameter

Step 903b: Send DCI to the UE, where the DCI indicates a slot used by the UE to transmit a HARQ-ACK

Step 904b: The UE receives the DCI from the base station, and determines the slot that is indicated by the DCI and that is used for transmitting the HARQ-ACK

Step 905b: The UE sends the HARQ-ACK on a PUCCH resource in at least one sub-slot of the slot indicated by the DCI

Step 906b: The base station determines the PUCCH resource, and receives the HARQ-ACK on the PUCCH resource

FIG. 9B

ID = 0, S = 1, and L = 2          ID = 1, S = 5, and L = 3

FIG. 10

ID = 0, S = 1, and L = 2          ID = 0, S = 5, and L = 2

FIG. 11A

Slot n Slot n+1 Slot n+2 Slot n+3 Slot n+4

PDSCH PUCCH

K1 = 4

Sub-slot 0 Sub-slot 1

ID = 0, S = 1, and L = 2  ID = 0, S = 5, and L = 3

FIG. 11B

Base station | UE

Step 1201: Send a first PUCCH configuration parameter to the UE, where the first PUCCH configuration parameter is used for configuring a PUCCH resource in an initial BWP

Step 1202: The UE receives the first PUCCH configuration parameter from the base station, where the first PUCCH configuration parameter is used for configuring the PUCCH resource in the initial BWP

Step 1203: Send DCI to the UE, where the DCI may indicate a slot for transmitting a HARQ-ACK

Step 1204: The UE receives the DCI from the base station, where the DCI may indicate the slot for transmitting the HARQ-ACK

Step 1205: The UE sends the HARQ-ACK on a PUCCH resource in the slot by using an active BWP

Step 1206: The base station determines the PUCCH resource, and receives the HARQ-ACK on the PUCCH resource

FIG. 12

```
┌──────────────┐                                    ┌──────────────┐
│ Base station │                                    │      UE      │
└──────────────┘                                    └──────────────┘
        │                                                   │
        │  Step 1301: Send a first PUCCH configuration parameter
        │      to the UE, where the first PUCCH configuration
        │   parameter is used for configuring a PUCCH resource in
        │                   an initial BWP
        │                                              ────────▶│
        │                                                   │
        │       ┌───────────────────────────────────────────────┐
        │       │    Step 1302: The UE receives the first PUCCH  │
        │       │  configuration parameter from the base station,│
        │       │   where the first PUCCH configuration parameter│
        │       │  is used for configuring the PUCCH resource in │
        │       │              the initial BWP                   │
        │       └───────────────────────────────────────────────┘
        │                                                   │
        │      Step 1303: Send a second PUCCH configuration
        │      parameter to the UE, where the second PUCCH
        │  configuration parameter includes a length of a sub-slot
        │  - - - - - - - - - - - - - - - - - - - - - - - ─ ─ ▶│
        │                                                   │
        │       ┌ ─ ─ ─ ─ ─ ─ ─ ─ ─ ─ ─ ─ ─ ─ ─ ─ ─ ─ ─ ─ ─ ┐
        │       │    Step 1304: The UE receives the second PUCCH │
        │       │ configuration parameter from the base station, and│
        │       │   determines the length of the sub-slot in the first│
        │       │              configuration parameter          │
        │       └ ─ ─ ─ ─ ─ ─ ─ ─ ─ ─ ─ ─ ─ ─ ─ ─ ─ ─ ─ ─ ─ ┘
        │                                                   │
        │     Step 1305: Send DCI to the UE, where the DCI may
        │       indicate a slot for transmitting a HARQ-ACK
        │                                              ────────▶│
        │                                                   │
        │       ┌───────────────────────────────────────────────┐
        │       │ Step 1306: The UE receives the DCI from the base│
        │       │  station, where the DCI may indicate the slot for│
        │       │           transmitting the HARQ-ACK            │
        │       └───────────────────────────────────────────────┘
        │                                                   │
        │    Step 1307: The UE sends the HARQ-ACK on a PUCCH
        │       resource in the slot by using an active BWP
        │◀────────                                          │
        │                                                   │
┌───────────────────────────────────────────────────┐     │
│ Step 1308: The base station determines the PUCCH   │     │
│  resource, and receives the HARQ-ACK on the PUCCH  │     │
│                    resource                         │     │
└───────────────────────────────────────────────────┘     │
        │                                                   │
```

FIG. 13

1400

Terminal device/Network device

Receiving unit 1401

Sending unit 1402

FIG. 14

1500

Terminal device/Network device

Storage module 1502

Processing module 1501

Communication module 1503

FIG. 15

# EP 4 117 213 A1

## INTERNATIONAL SEARCH REPORT

| | International application No. |
|---|---|
| | **PCT/CN2021/082490** |

**A. CLASSIFICATION OF SUBJECT MATTER**

H04L 1/18(2006.01)i

According to International Patent Classification (IPC) or to both national classification and IPC

**B. FIELDS SEARCHED**

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 下行控制信息, 物理上行控制信道, 混合自动重传请求确认, 时隙, 子时隙, 资源, 指示, 长度, 部分带宽, 带宽部分, DCI, PUCCH, HARQ-ACK, slot, sub-slot, resource, BWP, CCE, configuration, indicate

**C. DOCUMENTS CONSIDERED TO BE RELEVANT**

| Category* | Citation of document, with indication, where appropriate, of the relevant passages | Relevant to claim No. |
|---|---|---|
| X | CMCC. "3GPP TSG RAN WG1 #99 R1-1912539" <br> *Discussion on UCI enhancements for URLLC,* 22 November 2019 (2019-11-22), <br> section 2.1 | 1-14, 19-32, 37-41 |
| X | CATT. "3GPP TSG-RAN WG1 Meeting #98bis R1- 1910312 Draft CR1 for Alt1" <br> *Correction on HARQ-ACK codebook determination with BWP switch,* <br> 20 October 2019 (2019-10-20), <br> section 9.1.2.1 | 15-18, 33-36, 37-41 |
| A | SPREADTRUM COMMUNICATIONS. "3GPP TSG RAN WG1 #97 R1-1906358" <br> *Discussion on UCI enhancements for URLLC,* 17 May 2019 (2019-05-17), <br> entire document | 1-41 |
| A | OPPO. "3GPP TSG RAN WG1 #96bis R1-1904043" <br> *UCI enhancements for URLLC,* 12 April 2019 (2019-04-12), <br> entire document | 1-41 |
| A | CN 110535608 A (ZTE CORPORATION) 03 December 2019 (2019-12-03) <br> entire document | 1-41 |
| A | WO 2020027143 A1 (SHARP KABUSHIKI KAISHA) 06 February 2020 (2020-02-06) <br> entire document | 1-41 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **26 May 2021** | **21 June 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/082490**

| Patent document cited in search report | | | Publication date (day/month/year) | Patent family member(s) | | | Publication date (day/month/year) |
|---|---|---|---|---|---|---|---|
| CN | 110535608 | A | 03 December 2019 | WO | 2021018185 | A1 | 04 February 2021 |
| WO | 2020027143 | A1 | 06 February 2020 | CN | 112567802 | A | 26 March 2021 |

Form PCT/ISA/210 (patent family annex) (January 2015)

## REFERENCES CITED IN THE DESCRIPTION

### Patent documents cited in the description

- CN 202010281207